# EUROPÄISCHE PATENTSCHRIFT

(11) **EP 3 143 688 B1**
(45) Veröffentlichungstag und Bekanntmachung des Hinweises auf die Patenterteilung: **08.04.2020**
(21) Anmeldenummer: 15708462.5
(22) Anmeldetag: 25.02.2015
(51) Int. Cl.: H02P 6/00, B25F 5/00

(54) **WERKZEUGMASCHINENVORRICHTUNG**
MACHINE TOOL DEVICE
DISPOSITIF DE MACHINE-OUTIL

(30) Priorität: 13.05.2014 DE 102014209032
(43) Veröffentlichungstag der Anmeldung: 22.03.2017
(73) Patentinhaber: Robert Bosch GmbH, 70442 Stuttgart (DE)
(72) Erfinder: BOECK, Cornelius, 73230 Kirchheim (DE); BARTH, Daniel, 70771 Leinfelden-Echterdingen (DE); SCHADOW, Joachim, 70563 Stuttgart (DE); MAUTE, Joerg, 71069 Sindelfingen (DE); STOCK, Joern, 72658 Bempflingen (DE); ESENWEIN, Florian, 70771 Leinfelden-Echterdingen (DE); LUTZ, Manfred, 70794 Filderstadt (DE)
(86) Internationale Anmeldenummer: PCT/EP2015/053917
(87) Internationale Veröffentlichungsnummer: WO 2015/172900

(56) Entgegenhaltungen:
- DE-A1-102009 035 134
- DE-A1-102012 202 116
- DE-A1-102012 211 580
- US-A1- 2002 050 364
- US-A1- 2006 155 582
- US-A1- 2014 070 924
- US-B1- 7 377 202

## Beschreibung

### Stand der Technik

Aus US 2013/0187587 A1 ist bereits eine Werkzeugmaschinenvorrichtung, insbesondere eine Handwerkzeugmaschinenvorrichtung, bekannt, die eine Steuer-und/oder Regeleinheit und eine Antriebseinheitssensoreinheit zu einer Erfassung zumindest einer Antriebseinheitskenngröße umfasst, wobei die Antriebseinheitskenngröße zu einer Steuerung und/oder Regelung einer Antriebseinheit einer Werkzeugmaschine und/oder zu einer Informationsausgabe an einen Bediener von der Steuer- und/oder Regeleinheit verarbeitbar ist.

Die DE102012511580 offenbart eine Handwerkzeugmaschine mit einem Umgebungsdrucksensor, einer Steuereinrichtung und einem Anzeigeelement.

### Offenbarung der Erfindung

Die Erfindung geht aus von einer Werkzeugmaschinenvorrichtung, insbesondere von einer Handwerkzeugmaschinenvorrichtung, mit zumindest einer Steuer-und/oder Regeleinheit und mit zumindest einer Antriebseinheitssensoreinheit zu einer Erfassung zumindest einer Antriebseinheitskenngröße, die zumindest zu einer Steuerung und/oder Regelung einer Antriebseinheit einer Werkzeugmaschine und/oder zu einer Informationsausgabe an einen Bediener von der Steuer- und/oder Regeleinheit verarbeitbar ist.

Es wird vorgeschlagen, dass die Werkzeugmaschinenvorrichtung zumindest eine Umgebungssensoreinheit zu einer Erfassung zumindest einer Umgebungskenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Unter einer "Umgebungssensoreinheit" soll hier insbesondere eine Sensoreinheit verstanden werden, die zumindest ein Umgebungssensorelement zu einer Erfassung von zumindest einer Umgebungskenngröße aufweist, die eine die Werkzeugmaschinenvorrichtung umgebende Umwelt definiert, eine Einwirkung der Werkzeugmaschinenvorrichtung auf die umgebende Umwelt definiert und/oder eine Positionierung der Werkzeugmaschinenvorrichtung relativ zur umgebenden Umwelt definiert. Hierbei ist die Umgebungssensoreinheit vorzugsweise dazu vorgesehen, zumindest einen Umgebungsdruck, eine Umgebungstemperatur, eine Geräuschemission einer die Werkzeugmaschinenvorrichtung umfassenden Werkzeugmaschine, eine elektromagnetische Strahlung, eine Stauberzeugungskenngröße, eine Funkenbildungskenngröße, eine Geruchskenngröße, eine Schadstoffkenngröße, eine globale Position und/oder eine Position der Werkzeugmaschinenvorrichtung im Raum, eine Feuchtigkeitskenngröße, eine pH-Wert-Kenngröße, eine Gaskenngröße o. dgl. zu erfassen. Die Steuer- und/oder Regeleinheit ist zumindest vorzugsweise dazu vorgesehen, die Antriebseinheit in Abhängigkeit von der zumindest einen mittels der Antriebseinheitssensoreinheit erfassten Antriebseinheitskenngröße und in Abhängigkeit von der zumindest einen mittels der Umgebungssensoreinheit erfassten Umgebungskenngröße zu steuern und/oder zu regeln. Zusätzlich ist die Steuer- und/oder Regeleinheit bevorzugt zumindest dazu vorgesehen, eine Information in Abhängigkeit von der zumindest einen mittels der Antriebseinheitssensoreinheit erfassten Antriebseinheitskenngröße und in Abhängigkeit von der zumindest einen mittels der Umgebungssensoreinheit erfassten Umgebungskenngröße an einen Bediener auszugeben. Bevorzugt ist zumindest eine Antriebseinheitskennlinie, eine maximale Drehzahl, eine minimale Drehzahl, ein maximales Drehmoment und/oder ein minimales Drehmoment der Antriebseinheit mittels der Steuer- und/oder Regeleinheit steuerbar und/oder regelbar.

Zudem ist es denkbar, dass die Steuer- und/oder Regeleinheit dazu vorgesehen ist, ein Lüftersystem einer die Werkzeugmaschinenvorrichtung umfassenden Werkzeugmaschine in Abhängigkeit von der zumindest einen mittels der Antriebseinheitssensoreinheit erfassten Antriebseinheitskenngröße und in Abhängigkeit von der zumindest einen mittels der Umgebungssensoreinheit erfassten Umgebungskenngröße zu steuern und/oder zu regeln. Dies kann beispielsweise durch ein Schließen von Klappen und somit durch eine Reduzierung eines Luftstroms erreicht werden. Es kann vorteilhaft ein Lüftergeräusch reduziert werden. Zudem ist mittels der Steuer- und/oder Regeleinheit beispielsweise eine aktive Änderung eines Getriebespiels in Abhängigkeit von der zumindest einen mittels der Antriebseinheitssensoreinheit erfassten Antriebseinheitskenngröße und in Abhängigkeit von der zumindest einen mittels der Umgebungssensoreinheit erfassten Umgebungskenngröße ebenfalls denkbar, um ein Getriebegeräusch zu reduzieren. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Unter "vorgesehen" soll insbesondere speziell programmiert, speziell ausgelegt und/oder speziell ausgestattet verstanden werden. Darunter, dass ein Element und/oder eine Einheit zu einer bestimmten Funktion vorgesehen sind/ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Die Antriebseinheitssensoreinheit ist vorzugsweise dazu vorgesehen, zumindest eine Antriebseinheitskenngröße einer als Elektromotoreinheit, insbesondere einer als bürstenlose Elektromotoreinheit, ausgebildeten Antriebseinheit zu erfassen. Somit ist die Antriebseinheitssensoreinheit bevorzugt als EC-Elektromotorantriebseinheitssensoreinheit ausgebildet. Die Antriebseinheitskenngröße kann hierbei als Antriebseinheitsstrom, als Antriebseinheitsspannung, als Antriebseinheitsdrehwinkel, als elektrischer Antriebseinheitswiderstand, als Antriebseinheitsmagnetfeldkenngröße, als elektromotorische Kraftkenngröße der Antriebseinheit, als Antriebseinheitsdrehzahl, als Antriebseinheitsdrehmoment, als Antriebseinheitswinkelgeschwindigkeit, als Antriebseinheitsrotorposition, als Antriebseinheitsdrehrichtung, als Antriebseinheitstemperatur oder als eine weitere, einem Fachmann als sinnvoll erscheinende Antriebseinheitskenngröße ausgebildet sein. Die Antriebseinheitskenngröße ist vorzugsweise verschieden von einer reinen Schalterbetätigung eines Schalters durch einen Bediener. Die Antriebseinheitssensoreinheit umfasst zumindest ein Antriebseinheitssensorelement zu einer Erfassung der zumindest einen Antriebseinheitskenngröße. Das Antriebseinheitssensorelement kann hierbei als Antriebseinheitsstromsensor, als Antriebseinheitsspannungssensor, als Antriebseinheitsdrehwinkelsensor, als elektrischer Antriebseinheitswiderstandssensor, als Antriebseinheitsmagnetfeldsensor, als elektromotorischer Kraftkenngrößensensor, als Antriebseinheitsdrehzahlsensor, als Antriebseinheitsdrehmomentsensor, als Antriebseinheitswinkelgeschwindigkeitssensor, als Antriebseinheitsrotorpositionssensor, als Antriebseinheitsdrehrichtungssensor, als Antriebseinheitstemperatursensor oder als ein anderes, einem Fachmann als sinnvoll erscheinendes Antriebseinheitssensorelement ausgebildet sein.

Eine Informationsausgabeeinheit zu einer Informationsausgabe an einen Bediener ist vorzugsweise als optische, akustische und/oder haptische Informationsausgabeeinheit ausgebildet. Hierbei ist die Informationsausgabeeinheit vorzugsweise ein Bestandteil der Werkzeugmaschinenvorrichtung. Es ist jedoch auch denkbar, dass die Informationsausgabeeinheit ein Bestandteil einer die Werkzeugmaschinenvorrichtung umfassenden Werkzeugmaschine oder ein Bestandteil einer externen Einheit, wie beispielsweise eines Smartphones, eines Tablets, eines PCs, eines Laptops o. dgl., ist. Die Informationsausgabeeinheit umfasst zu einer Informationsausgabe an einen Bediener vorzugsweise zumindest eine optische Ausgabeeinheit, wie beispielsweise ein LC-Display, ein berührungsempfindliches Display, ein LED-Display, ein Plasma-Display o. dgl., zu einer optischen Informationsausgabe an einen Bediener. Bevorzugt umfasst die Informationsausgabeeinheit zumindest eine akustische Ausgabeeinheit, wie beispielsweise einen Lautsprecher o. dgl., zu einer akustischen Informationsausgabe an einen Bediener. Besonders bevorzugt umfasst die Informationsausgabeeinheit zumindest eine haptische Ausgabeeinheit, wie beispielsweise eine Schwingungserregereinheit o. dgl., zu einer haptischen Informationsausgabe an einen Bediener. Es ist jedoch auch denkbar, dass eine Informationsausgabe an einen Bediener infolge einer Ansteuerung der Antriebseinheit mittels der Steuer- und/oder Regeleinheit erfolgt. Hierbei ist es denkbar, dass eine Informationsausgabe an einen Bediener beispielsweise durch eine Drehzahlschwankung einer Antriebseinheitsdrehzahl o. dgl. erfolgt. Weitere, einem Fachmann als sinnvoll erscheinende antriebseinheitsbezogene Informationsausgaben an einen Bediener sind ebenfalls denkbar. Mittels der erfindungsgemäßen Ausgestaltung der Werkzeugmaschinenvorrichtung kann vorteilhaft eine Einhaltung von Emissionsgrenzen ermöglicht werden. Somit kann vorteilhaft eine Bearbeitung von Werkstücken an Orten ermöglicht werden, an denen Emissionsgrenzen gelten. Zudem ist vorteilhaft eine geringe Belästigung von Personen, die sich im Umfeld einer Werkstückbearbeitung befinden, erreichbar. Somit kann vorteilhaft eine emissionsarme Bearbeitung von Werkstücken realisiert werden. Zudem kann vorteilhaft eine hohe Bedienersicherheit erreicht werden, da beispielsweise eine Ausrichtung der Werkzeugmaschinenvorrichtung in einem Raum und eine globale Position der Werkzeugmaschinenvorrichtung in Kombination mit ortsbedingten Sicherheitsanforderungen zu einer Steuerung und/oder Regelung der Antriebseinheit und/oder von Sicherheitsfunktionen nutzbar sind. Somit kann vorteilhaft ein Bediener vor Verletzungen geschützt werden.

Des Weiteren wird vorgeschlagen, dass die Werkzeugmaschinenvorrichtung zumindest eine Kommunikationseinheit zu einer Kommunikation mit zumindest einer externen Einheit zu einem Austausch von elektronischen Daten zumindest zu einer Steuerung und/oder Regelung der Antriebseinheit umfasst. Die Kommunikationseinheit ist vorzugsweise als kabellose Kommunikationseinheit ausgebildet. Hierbei kann die Kommunikationseinheit als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit o. dgl. ausgebildet sein. Besonders bevorzugt ist die Steuer- und/oder Regeleinheit dazu vorgesehen, die Antriebseinheit und/oder Sicherheitsfunktionen in Abhängigkeit der zumindest einen mittels der Umgebungssensoreinheit erfassten Umgebungskenngröße und in Abhängigkeit von mittels der Kommunikationseinheit an die Steuer- und/oder Regeleinheit übertragenen elektronischen Daten zu steuern und/oder zu regeln. Besonders bevorzugt ist die Kommunikationseinheit zu einer bidirektionalen Datenübertragung vorgesehen. In einer alternativen Ausgestaltung ist die Kommunikationseinheit als kabelgebundene Kommunikationseinheit ausgebildet, wie beispielsweise als LAN-Kommunikationseinheit, als USB-Kommunikationseinheit o. dgl. Die externe Einheit ist vorzugsweise als Smartphone ausgebildet, das eine App zu einer Kommunikation mit der Kommunikationseinheit aufweist. Es ist jedoch auch denkbar, dass die externe Einheit als externe, transportable Bedieneinheit, als fest installierte Bedieneinheit an einem Arbeitsplatz eines Bedieners, als fest in einem Raum installierte Synchronisationseinheit eines Einsatzortes, die von einer Zentrale gesteuert werden kann, wie beispielsweise infolge von Firmenvorgaben/Sicherheitsbestimmungen, als Bedienerkörperkenngrößenüberwachungseinheit, als externe Sensoreinheit oder als weitere, einem Fachmann als sinnvoll erscheinende zentrale oder dezentrale Bedieneinheit, Eingabestation und/oder zentrales oder dezentrales Terminal ausgebildet ist. Es kann somit vorteilhaft eine Synchronisation von elektronischen Daten ermöglicht werden. Wird beispielsweise eine die Werkzeugmaschinenvorrichtung umfassende Werkzeugmaschine in einem Synchronisationsmodus in Betrieb genommen, beispielsweise durch ein Einstecken einer Akkumulatorvorrichtung, bei einem Einstecken eines Stromversorgungskabels oder durch eine Aktivierung durch einen Bediener, wird zumindest teilweise automatisch eine Verbindung zwischen der Kommunikationseinheit und der externen Einheit aufgebaut. In der externen Einheit hinterlegte Einstellungen sind somit vorzugsweise direkt auf die die Werkzeugmaschinenvorrichtung umfassende Werkzeugmaschine übertragbar. Hierbei kann es sich um individuelle Einstellungen eines Bedieners, wie beispielsweise ein gewünschtes, schnelles Hochfahren auf eine eingestellte Drehzahl und eine maximale Leistung und/oder um Vorgaben einer Firma, wie beispielsweise eine Einhaltung einer Sicherheitsfunktion in einem vorgegebenen Bereich eines Firmengeländes oder eines Einsatzorts usw. handeln.

Zudem sind elektronische Daten mittels der Kommunikationseinheit an die externe Einheit übertragbar. Hierbei ist beispielsweise eine Vibrationsbelastung eines Bedieners zu einer Kontrolle einer Einhaltung einer Belastungsgrenze und/oder eine eventuelle Bezahlung von Zulagen und/oder eine Laufzeit und eine Last zu einer Beurteilung einer Werkzeugmaschinenauslastung an eine Firmenzentrale o. dgl. übertragbar. Es ist zudem denkbar, dass die externe Einheit ein Vorhandensein einer Sicherheitsausrüstung und/oder einer geeigneten Arbeitskleidung überprüft, wie beispielsweise mittels RFID-Kennung usw., wobei die externe Einheit in Abhängigkeit einer erkannten Sicherheitsausrüstung und/oder einer geeigneten Arbeitskleidung Einstellungen zu einer Steuerung und/oder Regelung der Antriebseinheit und/oder von Sicherheitsfunktionen der die Werkzeugmaschinenvorrichtung umfassenden Werkzeugmaschine über die Kommunikationseinheit an die Steuer- und/oder Regeleinheit überträgt.

Insbesondere bei einer Bearbeitung eines Werkstücks in einem Raum, wie beispielsweise einem Büroraum, sind Emissionen, wie beispielsweise Schallemissionen, mittels eines Körperschalls an weitere Bereiche eines Gebäudes, in dem der Raum angeordnet ist, übertragbar. Zu einer geringen Belastung von Personen im Gebäude durch die Emissionen, die bei einer Bearbeitung des Werkstücks im Raum entstehen, ist vorzugsweise zumindest eine als Sensoreinheit ausgebildete externe Einheit im weiteren Bereich des Gebäudes anordenbar, die zu einer Erfassung von Emissionskenngrößen vorgesehen ist. Mittels der Kommunikationseinheit sind die erfassten Emissionskenngrößen vorteilhaft auf die Steuer- und/oder Regeleinheit übertragbar. Die Steuer- und/oder Regeleinheit steuert und/oder regelt hierbei vorzugsweise die Antriebseinheit in Abhängigkeit von den Emissionsgrenzen. Hierdurch kann vorteilhaft eine Bearbeitung eines Werkstücks in einem Raum eines Gebäudes erfolgen, wobei Personen in weiteren Bereichen des Gebäudes einer geringen Emissionsbelästigung ausgesetzt sind. Zudem ist mittels der Kommunikationseinheit vorzugsweise eine Synchronisation der Werkzeugmaschinenvorrichtung mit einer Uhrzeit denkbar. Hierdurch sind insbesondere Mittagsruhezeiten einhaltbar. Somit ist die Antriebseinheit in Abhängigkeit von einer Tageszeit mittels der Steuer- und/oder Regeleinheit steuerbar und/oder regelbar. Es kann vorteilhaft eine Einhaltung einer Ruhezeit erreicht werden. Zudem kann mittels der erfindungsgemäßen Ausgestaltung vorteilhaft eine komfortable, insbesondere zentrale, Einstellung von Kenngrößen einer die Werkzeugmaschinenvorrichtung umfassenden Werkzeugmaschine erfolgen. Ferner kann vorteilhaft eine Kommunikation zwischen der Steuer- und/oder Regeleinheit und einer als Emissionsgrenzwertüberwachungseinheit ausgebildeten externen Einheit und/oder einer anderen, einem Fachmann als sinnvoll erscheinenden externen Einheit erfolgen, um vorteilhaft Sicherheitsfunktionen zu steuern und/oder zu regeln. Somit kann vorteilhaft ein hohes Maß an Rücksicht auf eine Arbeitsstelle umgebende Personen genommen werden.

Ferner wird vorgeschlagen, dass die Steuer- und/oder Regeleinheit dazu vorgesehen ist, mittels der Kommunikationseinheit auf eine zentrale Datenbank zuzugreifen, in der zumindest eine Sicherheits- und/oder Betriebsbereichsregel hinterlegt sind/ist, die zumindest zu einer Steuer- und/oder Regelung der Antriebseinheit von der Steuer- und/oder Regeleinheit verarbeitbar sind/ist. Somit ist die Steuer- und/oder Regeleinheit vorzugsweise dazu vorgesehen, zumindest die Antriebseinheit der tragbaren Werkzeugmaschine in Abhängigkeit von zumindest einer Sicherheits- und/oder Betriebsbereichsregel eines Bereichs einer Infrastruktur zu steuern und/oder zu regeln. Hierbei ist insbesondere ein Ort, wie beispielsweise eine globale Position, an dem die tragbare Werkzeugmaschine innerhalb der Infrastruktur genutzt wird, berücksichtigbar. Zudem ist es denkbar, dass die Steuer- und/oder Regeleinheit dazu vorgesehen ist, weitere Funktionen der tragbaren Werkzeugmaschine, wie beispielsweise eine Sicherheitsfunktion (Kick-Back-Funktion o. dgl.) in Abhängigkeit von zumindest einer Sicherheits-und/oder Betriebsbereichsregel eines Bereichs einer Infrastruktur zu steuern und/oder zu regeln. Zudem ist es denkbar, dass Orte, wie beispielsweise Baustellen, außerhalb der Infrastruktur mittels eines digitalen Sicherheits- und/oder Betriebsbereichsregelrasters auf Grundlage von GPS-Daten überzogen sind, mittels dem eine Zuordnung von Sicherheits- und/oder Betriebsbereichsregeln für einen Ort außerhalb der Infrastruktur erreichbar ist.

Der Begriff "zentrale Datenbank" soll hier insbesondere eine Datenbank definieren, die zentral von einer Verwaltungseinheit, wie beispielsweise von einer Gebäudeverwaltung, von einer Sicherheitsverwaltung o. dgl. gepflegt und/oder verwaltet wird. Bevorzugt sind in der zentralen Datenbank Daten, insbesondere elektronische Daten, hinterlegt, die spezifische Regeln, Auflagen, Gefährdungspotenziale, Sicherheitskategorien o. dgl. für zumindest einen Bereich einer Infrastruktur, insbesondere einen Bereich eines Werksgeländes, einen Bereich einer Arbeitsstätte o. dgl. definieren. In einer Infrastruktur, insbesondere in einer Infrastruktur eines Werksgeländes sind Labore, Werkstätten, Büros o. dgl. vorhanden, die unterschiedliche Gefährdungspotenziale aufweisen. Hierbei trägt insbesondere das Facility Management (FCM) eine Verantwortung für technische Einrichtungen und/oder einzelne Bereiche der Infrastruktur. Vorzugsweise werden regelmäßig Gefährdungsbeurteilungen von Health and Safety Engineers (HSE) für technische Einrichtungen und/oder für einzelne Bereiche der Infrastruktur durchgeführt. Somit werden vorzugsweise einzelnen Bestandteilen der Infrastruktur, wie beispielsweise einzelnen Laboren, einzelnen Werkstätten und/oder einzelnen Büros spezifische Regeln, Auflagen, Sicherheitskategorien o. dgl. zugeordnet. Beispielsweise kann eine Zuordnung vorgenommen werden, die besagt, dass hohe bis sehr hohe Sicherheitsstandards einzuhalten sind. Hierbei kann beispielsweise in einzelnen Bereichen der Infrastruktur, insbesondere in bestimmten Räumen, ein Explosionsschutz gelten. Somit sind vorzugsweise in diesen Bereichen Arbeiten untersagt, bei denen beispielsweise Funken entstehen können, oder es sind nur bestimmte Werkzeugmaschinen zu einer Durchführung der Arbeiten zugelassen. Ferner sind Zuordnungen mit mittleren bis niedrigen Sicherheitsstandards denkbar. Zudem sind zusätzlich oder alternativ Zuordnungen denkbar, die Vibrations- und/oder Geräuschlimits betreffen.

Bevorzugt wird die zentrale Datenbank in regelmäßigen Zeitabständen aktualisiert, insbesondere von einem Mitarbeiter des Facility Managements und/oder von einem Health and Safety Engineer (HSE). Hierbei werden vorzugsweise für die einzelnen Bereiche der Infrastruktur, wie beispielsweise für einzelne Räume, Labore, Werkstätten o. dgl., Gefährdungsbeurteilungen durchgeführt. Anhand dieser Gefährdungsbeurteilungen sind enstprechende elektronische Daten in der zentralen Datenbank ablegbar, die in Abhängigkeit eines Grads der Gefährdung den einzelnen Bereichen der Infrastruktur Benutzungs- und/oder Betriebskenngrößen zu einer Benutzung und/oder zu einem Betrieb einer tragbaren Werkzeugmaschine vorgeben, wie beipsielsweise eine Einhaltung von vorgegebenen Verhaltensregeln, ein Vorhandensein einer persönlichen Schutzausrüstung (PSA), ein Festlegen einer Zugangsberechtigung, eine Vorweisungspflicht einer erweiterten Ausbildung oder einer Einweisung. Mittels der erfindungsgemäßen Ausgestaltung kann somit vorteilhaft eine hohe Anwendersicherheit erreicht werden, da eine automatische Einbeziehung von Sicherheits- und/oder Betriebsbereichsregeln mittels der Steuer- und/oder Regeleinheit erfolgt. Somit kann vorteilhaft eine orts- und/oder regelabhängige Steuer- und/oder Regelung der tragbaren Werkzeugmaschine erreicht werden. Zudem ist es denkbar, dass zusätzlich oder alternativ zu einer Kommunikation mit der zentralen Datenbank eine Kommunikation, insbesondere ein Datenaustausch, mit zumindest einer Sensoreinheit einer Arbeitskleidung, insbesondere einer persönlichen Schutzausrüstung (PSA), die ein Bediener und/oder Anwender am Körper trägt, erfolgt. Somit kann vorteilhaft eine Sicherheitsfunktion der tragbaren Werkzeugmaschine weiter gesteigert werden. Es kann besonders vorteilhaft eine sichere Erkennung von Gefahrensituationen infolge eines Anzeigens, eines aktiven Warnens, eines Außerbetriebnehmens der tragbaren Werkzeugmaschine o. dgl. ermöglicht werden. Somit kann ein Bediener der tragbaren Werkzeugmaschine vorteilhaft vor Gefährdungen und/oder vor Verletzungen geschützt werden.

Vorteilhafterweise ist die Steuer- und/oder Regeleinheit dazu vorgesehen, zumindest in Abhängigkeit von zumindest einer mittels der Umgebungssensoreinheit erfassten Umgebungskenngröße, die als Emissionskenngröße der Werkzeugmaschine ausgebildet ist, die Antriebseinheit zu steuern und/oder zu regeln. Hierzu umfasst die Umgebungssensoreinheit vorzugsweise zumindest ein Umgebungssensorelement, das dazu vorgesehen ist, eine Staubentwicklung zu erfassen, insbesondere optisch zu erfassen. Eine maximal zulässige Stauberzeugungskenngröße kann hierbei in einem Netzwerk, insbesondere internes Firmennetzwerk, Internetnetzwerk usw., abgelegt sein, auf das die Werkzeugmaschinenvorrichtung mittels der Kommunikationseinheit zugreift, oder in einer Speichereinheit der Steuer- und/oder Regeleinheit. Die Steuer- und/oder Regeleinheit vergleicht eine erfasste Emissionskenngröße der Werkzeugmaschine mit einer im Netzwerk oder in der Speichereinheit hinterlegten maximal zulässigen Stauberzeugungskenngröße. Hierbei ist es denkbar, dass eine Absaugleistung eines Staubsaugers entsprechend der erfassten Emissionskenngröße der Werkzeugmaschine gesteuert und/oder geregelt wird. Zudem wird zumindest die Antriebseinheit in Abhängigkeit von der erfassten Emissionskenngröße der Werkzeugmaschine gesteuert und/oder geregelt. Ferner ist in Abhängigkeit von der erfassten Emissionskenngröße mittels der Informationsausgabeeinheit eine Information ausgebbar, wie beispielsweise ein Hinweis auf eine Nutzung eines stärkeren Staubsaugers oder ein Hinweis auf einen Filterwechsel o. dgl. Das Umgebungssensorelement kann hierbei auch Bestandteil einer externen Sensoreinheit, die mittels einer Kommunikationseinheit der Werkzeugmaschinenvorrichtung elektronische Daten mit der Werkzeugmaschinenvorrichtung austauscht, sein. Zudem umfasst die Umgebungssensoreinheit zumindest ein Umgebungssensorelement, das dazu vorgesehen ist, eine globale Position der Werkzeugmaschinenvorrichtung zu erfassen. Ferner umfasst die Umgebungssensoreinheit zumindest ein Umgebungssensorelement, das dazu vorgesehen ist, eine Geräuschemission der Werkzeugmaschine zu erfassen. Bevorzugt ist infolge eines Abgleichs der erfassten globalen Position mit in einer Speichereinheit der Steuer-und/oder Regeleinheit abgelegten Daten erkennbar, ob sich die Werkzeugmaschinenvorrichtung in einem lärmempfindlichen Bereich befindet. Die Steuer-und/oder Regeleinheit steuert und/oder regelt hierbei die Antriebseinheit in Abhängigkeit von der erfassten Geräuschemission. Hierbei wird beispielsweise eine maximale Antriebseinheitsdrehzahl, eine Schlagfrequenz, eine Schlagenergie o. dgl. auf einen vordefinierten Wert reduziert, um einen Geräuschgrenzwert nicht zu überschreiten. Alternativ ist die Geräuschemission, insbesondere ein Körperschall, mittels einer externen Sensoreinheit erfassbar. Mittels der erfindungsgemäßen Ausgestaltung kann vorteilhaft eine zuverlässige Staubabsaugung gewährleistet werden. Zudem kann ein Bediener vorteilhaft vor Gesundheitsschädigungen infolge eines Einatmens von großen Staubmengen geschützt werden. Ferner kann vorteilhaft eine geringe Lärmbelästigung für Außenstehende erreicht werden.

Ferner wird vorgeschlagen, dass die Steuer- und/oder Regeleinheit dazu vorgesehen ist, zumindest in Abhängigkeit von zumindest einer mittels der Antriebseinheitssensoreinheit erfassten Antriebseinheitskenngröße eine Bearbeitungswerkzeugposition eines an einer Werkzeugaufnahme der Werkzeugmaschine angeordneten Bearbeitungswerkzeugs zu ermitteln. Hierbei wird beispielsweise eine Stellung eines Ankers der Antriebseinheit mittels eines Lagesensorelements der Antriebseinheitssensoreinheit erfasst. Somit kann vorteilhaft ein Bearbeitungswerkzeug in einer gewünschten Position gestoppt werden. Es kann vorteilhaft ein hoher Bedienkomfort ermöglicht werden.

Vorteilhafterweise umfasst die Werkzeugmaschinenvorrichtung zumindest eine Arbeitsbereichbeleuchtungseinheit, die in Abhängigkeit von zumindest einer mittels der Umgebungssensoreinheit erfassten Umgebungskenngröße von der Steuer- und/oder Regeleinheit steuerbar und/oder regelbar ist. Hierzu umfasst die Umgebungssensoreinheit vorzugsweise zumindest ein Umgebungslichtsensorelement, das dazu vorgesehen ist, zumindest eine Lichtkenngröße zu erfassen, wie beispielsweise eine Helligkeit, einen Ausleuchtungsbereich, eine Intensität o. dgl. Erfindungsgemäß wird vorzugsweise eine Ausleuchtung eines Arbeitsbereichs und/oder eine Helligkeit eines Arbeitsbereichs durch das Umgebungslichtsensorelement erfasst. Die Arbeitsbereichbeleuchtungseinheit ist hierbei vorzugsweise mittels der Steuer- und/oder Regeleinheit in Abhängigkeit von der erfassten Ausleuchtung des Arbeitsbereichs und/oder der Helligkeit des Arbeitsbereichs auf einen voreingestellten Beleuchtungswert (anwenderspezifisch/Vorgabe durch Arbeitgeber/in einer Datenbank hinterlegt für einen Arbeitsbereich) steuerbar und/oder regelbar. Es ist jedoch auch denkbar, dass eine externe Sensoreinheit vorgesehen ist, die zu einer Steuerung und/oder Regelung der Arbeitsbereichbeleuchtungseinheit mittels der Kommunikationseinheit mit der Steuer- und/oder Regeleinheit kommuniziert. Somit kann die Arbeitsbereichbeleuchtungseinheit vorteilhaft an eine Helligkeit der Umgebung angepasst werden, so dass der Arbeitsbereich bei sich ändernder Helligkeit der Umgebung gleich hell beleuchtet wird.

Des Weiteren wird vorgeschlagen, dass die Werkzeugmaschinenvorrichtung zumindest eine Bearbeitungswerkzeugsensoreinheit zu einer Erfassung zumindest einer Bearbeitungswerkzeugkenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Die Bearbeitungswerkzeugsensoreinheit ist vorzugsweise dazu vorgesehen, zumindest eine Bearbeitungswerkzeugkenngröße eines in einer Werkzeugaufnahme angeordneten Bearbeitungswerkzeugs zu erfassen. Die Werkzeugaufnahme ist vorzugsweise ein Bestandteil einer die Werkzeugmaschinenvorrichtung umfassenden Werkzeugmaschine. Es ist jedoch auch denkbar, dass die Werkzeugaufnahme ein Bestandteil der Werkzeugmaschinenvorrichtung ist. Die Bearbeitungswerkzeugkenngröße kann hierbei als Bearbeitungswerkzeugmasse, als Bearbeitungswerkzeugabmessung, als Bearbeitungswerkzeugschwingung, als Bearbeitungswerkzeuggeschwindigkeit, als Bearbeitungswerkzeugdrehzahl, als Bearbeitungswerkzeugträgheit, als Bearbeitungswerkzeugart, als Bearbeitungswerkzeugtemperatur, als Bearbeitungswerkzeugverschmutzungsgrad, als Bearbeitungswerkzeugschneidkantenabnutzung, als Bearbeitungswerkzeugposition, insbesondere als Bearbeitungswerkzeugposition innerhalb einer Werkzeugaufnahme, oder als eine andere, einem Fachmann als sinnvoll erscheinende Bearbeitungswerkzeugkenngröße ausgebildet sein. Die Bearbeitungswerkzeugsensoreinheit umfasst zumindest ein Bearbeitungswerkzeugsensorelement zu einer Erfassung der zumindest einen Bearbeitungswerkzeugkenngröße. Das Bearbeitungswerkzeugsensorelement kann hierbei als Bearbeitungswerkzeugmassensensor, als Bearbeitungswerkzeugabmessungssensor, als Bearbeitungswerkzeugschwingungssensor, als Bearbeitungswerkzeuggeschwindigkeitssensor, als Bearbeitungswerkzeugdrehzahlsensor, als Bearbeitungswerkzeugträgheitssensor, als Bearbeitungswerkzeugartensensor, als Bearbeitungswerkzeugtemperatursensor, als Bearbeitungswerkzeugverschmutzungsgradsensor, als Bearbeitungswerkzeugschneidkantenabnutzungssensor oder als ein anderes, einem Fachmann als sinnvoll erscheinendes Bearbeitungswerkzeugsensorelement ausgebildet sein.

Vorzugsweise sind/ist mittels der Steuer- und/oder Regeleinheit zumindest bei einem Hochlaufen der Antriebseinheit auf eine Leerlaufdrehzahl zumindest eine Antriebseinheitskenngröße und/oder zumindest eine Bearbeitungswerkzeugkenngröße ermittelbar. Hierbei sind bevorzugt mittels zumindest eines Bearbeitungswerkzeugsensorelements, das als Beschleunigungssensor ausgebildet ist, Schwingungen eines Bearbeitungswerkzeugs erfassbar, wobei die erfassten Signale mittels der Steuer- und/oder Regeleinheit auswertbar sind. Zudem ist vorzugsweise mittels zumindest eines weiteren Bearbeitungswerkzeugsensorelements, das als optischer Sensor (Kamera, Infrarotsensor usw.) oder als Abstandssensor ausgebildet ist, eine Bearbeitungswerkzeugkenngröße erfassbar, die zu einer Bestimmung einer Bearbeitungswerkzeugabmessung von der Steuer- und/oder Regeleinheit verarbeitbar ist. Zudem ist bevorzugt mittels eines Antriebseinheitssensorelements ein Motorstrom bei einem Hochfahren der Antriebseinheit auf eine Leerlaufdrehzahl erfassbar, die zu einer Bestimmung einer Trägheit eines Bearbeitungswerkzeugs mittels der Steuer- und/oder Regeleinheit verarbeitbar ist. Ferner ist mittels zumindest einer erfassten Bearbeitungswerkzeugkenngröße eine Bearbeitungswerkzeugart eines Bearbeitungswerkzeugs mittels der Steuer- und/oder Regeleinheit bestimmbar, wobei Parameter zu einer Steuerung und/oder einer Regelung der Antriebseinheit bearbeitungswerkzeugspezifisch veränderbar sind, wie beispielsweise eine Einstellung einer Drehzahl für Edelstahlanwendungen bei einem Erkennen eines Edelstahlbearbeitungswerkzeugs an einer als Winkelschleifer ausgebildeten tragbaren Werkzeugmaschine, ein Soft-Start bei einem Erkennen eines Polierbearbeitungswerkzeugs oder eine Aktivierung einer Bremsfunktion einer tragbaren Werkzeugmaschine bei einer Erkennung eines Trennbearbeitungswerkzeugs, wie beispielsweise einer Trennscheibe bei einer als Winkelschleifer ausgebildeten tragbaren Werkzeugmaschine. Zusätzlich zu einer Erfassung von zumindest einer Bearbeitungswerkzeugkenngröße mittels der Bearbeitungswerkzeugsensoreinheit ist auch eine Übertragung von zumindest einer Bearbeitungswerkzeugkenngröße mittels RFID, eines Barcodes, eines Data-Matrix Codes o. dgl. denkbar. Hierdurch kann vorteilhaft eine eindeutige Kennung einer Bearbeitungswerkzeugart erfolgen, zu der in der Speichereinheit der Steuer- und/oder Regeleinheit bearbeitungswerkzeugspezifische Parameter hinterlegt sind, die infolge einer Erfassung von zumindest einer Bearbeitungswerkzeugkenngröße durch die Bearbeitungswerkzeugsensoreinheit mittels der Steuer- und/oder Regeleinheit anpassbar sind, wie beispielsweise an einen Verschleißgrad, an einen Unwuchtgrad usw.

Ein elektronischer Datenaustausch zwischen der Steuer- und/oder Regeleinheit und der Antriebseinheitssensoreinheit und/oder der Bearbeitungswerkzeugsensoreinheit erfolgt vorzugsweise drahtgebunden. In einer alternativen Ausgestaltung der Werkzeugmaschinenvorrichtung erfolgt ein elektronischer Datenaustausch zwischen der Steuer- und/oder Regeleinheit und der Antriebseinheitssensoreinheit und/oder der Bearbeitungswerkzeugsensoreinheit kabellos, wie beispielsweise mittels einer Bluetoothverbindung, mittels einer WLAN-Verbindung, mittels einer NFC-Verbindung, mittels einer Infrarotverbindung o. dgl. Die Steuer-und/oder Regeleinheit steuert und/oder regelt die Antriebseinheit besonders bevorzugt zumindest in Abhängigkeit von der mittels der Antriebseinheitssensoreinheit erfassten Antriebseinheitskenngröße und in Abhängigkeit von der mittels der Bearbeitungswerkzeugsensoreinheit erfassten Bearbeitungswerkzeugkenngröße. Weitere, einem Fachmann als sinnvoll erscheinende Kenngrößen, die von der Steuer- und/oder Regeleinheit zu einer Steuerung und/oder Regelung der Antriebseinheit berücksichtigbar sind, sind ebenfalls denkbar.

Mittels der erfindungsgemäßen Ausgestaltung der Werkzeugmaschinenvorrichtung kann vorteilhaft eine Beschädigung an einem Bearbeitungswerkzeug erkannt werden, insbesondere bevor ein Werkstück mit dem Bearbeitungswerkzeug bearbeitet wird. Es können vorteilhaft beispielsweise Vibrationen erfasst werden und eine entsprechende Warnung an einen Bediener ausgegeben werden, sollten die Vibrationen einen kritischen Wert überschreiten und/oder eine Steuerung und/oder Regelung der Antriebseinheit an ein beschädigtes Bearbeitungswerkzeug angepasst werden. Somit kann vorteilhaft eine Verletzungsgefahr für einen Bediener gering gehalten werden. Zudem können somit vorteilhaft unzulässig oder falsch montierte Bearbeitungswerkzeuge erkannt werden. Somit kann ein Bediener beispielsweise vorteilhaft frühzeitig auf eine Gefahr eines Berstens eines Bearbeitungswerkzeugs hingewiesen werden. Es kann daher vorteilhaft eine hohe Bedienersicherheit erreicht werden.

Ferner wird vorgeschlagen, dass die Werkzeugmaschinenvorrichtung zumindest eine Aktoreinheit zu einer Betätigung und/oder zu einer Arretierung einer Werkzeugaufnahme der Werkzeugmaschine zumindest in Abhängigkeit von der zumindest einen mittels der Bearbeitungswerkzeugsensoreinheit erfassten Bearbeitungswerkzeugkenngröße umfasst. Hierbei wird vorzugsweise mittels der Bearbeitungswerkzeugsensoreinheit eine als Bearbeitungswerkzeugposition ausgebildete Bearbeitungswerkzeugkenngröße erfasst, die zu einer Steuerung und/oder Regelung der Aktoreinheit von der Steuer- und/oder Regeleinheit verarbeitbar ist. Mittels der erfindungsgemäßen Ausgestaltung kann vorteilhaft eine komfortable Bedienbarkeit einer die Werkzeugmaschinenvorrichtung umfassenden Werkzeugmaschine erreicht werden. Somit kann vorteilhaft ein hoher Bedienkomfort erreicht werden.

Zudem wird vorgeschlagen, dass die Werkzeugmaschinenvorrichtung zumindest eine Werkstücksensoreinheit zu einer Erfassung zumindest einer Werkstücckenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Bevorzugt ist die Werkstücksensoreinheit dazu vorgesehen, zumindest einen Werkstoff eines Werkstücks zu erfassen. Zudem ist die Werkstücksensoreinheit zusätzlich oder alternativ dazu vorgesehen, eine Dichte eines Werkstücks, einen Abstand eines Werkstücks relativ zu einem in einer Werkzeugaufnahme angeordneten Bearbeitungswerkzeug, eine Abmessung eines Werkstücks, eine Lage eines Werkstücks und/oder weitere, einem Fachmann als sinnvoll erscheinende Werkstückkenngrößen zu erfassen. Somit kann vorteilhaft eine Steuerung und/oder Regelung einer Antriebseinheit erfolgen, die vorteilhaft auf ein zu bearbeitendes Werkstück und ein in einer Werkzeugaufnahme angeordnetes Bearbeitungswerkzeug abgestimmt ist. Hierdurch kann vorteilhaft eine präzise Bearbeitung eines Werkstücks ermöglicht werden. Zudem kann vorteilhaft ein hoher Arbeitsfortschritt ermöglicht werden. Es kann vorteilhaft infolge einer Erfassung zumindest einer Werkstückkenngröße auf ein Verhalten bei einer Bearbeitung des Werkstücks geschlossen werden. Somit kann vorteilhaft eine hohe Sicherheit hinsichtlich einer Splittergefahr bei einer Bearbeitung eines Werkstücks erreicht werden.

Des Weiteren wird vorgeschlagen, dass die Werkzeugmaschinenvorrichtung zumindest eine Werkzeugmaschinenzubehörsensoreinheit zu einer Erfassung zumindest einer Werkzeugmaschinenzubehörkenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Unter einer "Werkzeugmaschinenzubehörsensoreinheit" soll hier insbesondere eine Sensoreinheit verstanden werden, die eine Kenngröße zumindest eines Werkzeugmaschinenzubehörs erfasst, das an einer die Werkzeugmaschinenvorrichtung umfassenden Werkzeugmaschine anbringbar ist. Die Werkzeugmaschinenzubehörkenngröße kann hierbei als eine Zubehörzustandskenngröße, wie beispielsweise eine Montagezustandskenngröße eines Zubehörs, als Abnutzungszustandskenngröße, als Zubehörpositionskenngröße, als Zubehörfunktionskenngröße, als Zubehörabmessungskenngröße o. dgl. ausgebildet sein. Somit kann vorteilhaft eine Berücksichtigung eines montierten Zubehörs bei einer Steuerung und/oder Regelung der Antriebseinheit mittels der Steuer- und/oder Regeleinheit erfolgen. Es kann beispielsweise vorteilhaft bei einem falschen, fehlerhaften und/oder verschlissenen Zubehör eine Informationsausgabe an einen Bediener erfolgen und/oder ein Steuer- und/oder Regelparameter kann vorteilhaft angepasst werden, wie beispielsweise eine Drehzahl, eine Stromzufuhr, eine Spannungszufuhr o. dgl.

Ferner wird eine Werkzeugmaschine, insbesondere eine tragbare Werkzeugmaschine mit einer erfindungsgemäßen Werkzeugmaschinenvorrichtung vorgeschlagen. Besonders bevorzugt ist die Werkzeugmaschine als tragbare Werkzeugmaschine ausgebildet. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Hierbei ist die tragbare Werkzeugmaschine vorzugsweise als Winkelschleifer ausgebildet. In einer alternativen Ausgestaltung ist die tragbare Werkzeugmaschine als Bohr- und/oder Meißelhammer ausgebildet. In einer weiteren alternativen Ausgestaltung ist die tragbare Werkzeugmaschine als Stichsäge ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Akkuschraubmaschine, als Schlagbohrmaschine, als Schleifmaschine, als Kreissägemaschine, als Diamantbohrmaschine, als Kettensäge, als Säbelsäge, als Hobelmaschine, als Gartenwerkzeugmaschine o. dgl. Mittels der erfindungsgemäßen Ausgestaltung der Werkzeugmaschine kann eine vorteilhafte Anpassung an Einsatzbedingungen ermöglicht werden. Zudem kann vorteilhaft eine auf einen Bediener individuell eingestellte Bearbeitung eines Werkstücks ermöglicht werden. Somit kann vorteilhaft eine präzise und leistungsoptimierte Bearbeitung eines Werkstücks ermöglicht werden. Zudem kann vorteilhaft eine hohe Sicherheit eines Bedieners bei einer Bearbeitung eines Werkstücks gewährleistet werden. Ferner kann vorteilhaft ein hoher Bedienkomfort erreicht werden.

Ferner wird ein Werkzeugmaschinensystem mit zumindest einer erfindungsgemäßen Werkzeugmaschine und mit zumindest einer externen Einheit, insbesondere einer externen Sensoreinheit vorgeschlagen. Die externe Einheit ist vorzugsweise in einer Ausgestaltung des Werkzeugmaschinensystems als externe Geräuschemissionssensoreinheit ausgebildet. Es ist eine Geräuschmessung realisierbar, mittels derer bei einer Überschreitung eines vorgegebenen Geräuschgrenzwerts beispielsweise eine durch Drehzahlabsenkung der Antriebseinheit erfolgt. Hierbei kann die externe Einheit beispielsweise als Smartphone ausgebildet sein. Zudem ist die externe Einheit in einer alternativen Ausgestaltung des Werkzeugmaschinensystems als externe Funkenflugerfassungseinheit ausgebildet. Es kann somit vorteilhaft in Abhängigkeit eines erfassten Funkenflugs eine maximale Funkenflugweite eingestellt werden, indem in Abhängigkeit von einem Bearbeitungswerkzeug, einem Werkstoff und/oder einem Anwendungsfall eine Drehzahl der Antriebseinheit durch die Steuer- und/oder Regeleinheit auf eine maximal Flugweite der Funken regelbar ist. Hierzu ist der Funkenflug beispielsweise optisch erfassbar und die Drehzahl zu einer Änderung einer Funkenflugweite anpassbar. Somit sind vorteilhaft Geräuschbelästigungen und/oder Beschädigungen vermeidbar und/oder reduzierbar.

Zudem wird ein Verfahren zu einer Steuerung und/oder Regelung zumindest einer erfindungsgemäßen Werkzeugmaschine, insbesondere einer tragbaren Werkzeugmaschine, vorgeschlagen, wobei die Steuer- und/oder Regeleinheit zumindest eine Umgebungsbeeinflussung durch die Werkzeugmaschine ermittelt und die Umgebungsbeeinflussung durch die Werkzeugmaschine zumindest zu einer Steuerung und/oder Regelung der Antriebseinheit der Werkzeugmaschine berücksichtigt. Somit kann vorteilhaft eine Anpassung von Betriebsparametern in Abhängigkeit von einer Umgebung erreicht werden. Es kann vorteilhaft eine Einhaltung von Emissionsgrenzen ermöglicht werden. Mittels des erfindungsgemäßen Verfahrens kann vorteilhaft eine zumindest im Wesentlichen automatische Einstellung von Betriebsparametern und/oder Betriebsmodi einer Werkzeugmaschine ermöglicht werden.

Ferner wird vorgeschlagen, dass das Verfahren zumindest einen Verfahrensschritt umfasst, bei dem die Steuer- und/oder Regeleinheit in zumindest einem Betriebsmodus eine Werkzeugaufnahme der Werkzeugmaschine zumindest teilweise automatisch öffnet und/oder schließt. Es kann vorteilhaft ein hoher Bedienkomfort realisiert werden. Zudem kann somit vorteilhaft eine Möglichkeit eines Einhandwerkzeugwechsels zur Verfügung gestellt werden.

Zudem wird vorgeschlagen, dass die Steuer- und/oder Regeleinheit, insbesondere in zumindest einem Betriebsmodus der tragbaren Werkzeugmaschine, zumindest teilweise automatisch mittels der Kommunikationseinheit auf die zentrale Datenbank zugreift, in der zumindest eine Sicherheits- und/oder Betriebsbereichsregel hinterlegt sind/ist, die zumindest zu einer Steuer- und/oder Regelung der Antriebseinheit von der Steuer- und/oder Regeleinheit verarbeitbar sind/ist. Bevorzugt wertet die Steuer- und/oder Regeleinheit die in der zentralen Datenbank hinterlegten Sicherheits- und/oder Betriebsbereichsregeln automatisch aus und interpretiert die Sicherheits- und/oder Betriebsbereichsregeln automatisch zu einer Steuer- und/oder Regelung der tragbaren Werkzeugmaschine. Besonders bevorzugt sind mittels der Kommunikationseinheit zusätzlich zu einem Zugriff auf die zentrale Datenbank mittels der Kommunikationseinheit elektronische Daten mit zumindest einer externen Einheit austauschbar. Somit kann vorzugsweise ein Datenaustausch zwischen der die Werkzeugmaschinenvorrichtung umfassenden tragbaren Werkzeugmaschine und weiteren externen Einheiten stattfinden, wie beispielsweise ein Datenaustausch zwischen der die Werkzeugmaschinenvorrichtung umfassenden tragbaren Werkzeugmaschine und einer Sensoreinheit einer Arbeitskleidung, einem Smartphone, einem Laptop, einem PC, einem Handheld, einem Tablet, einem Server o. dgl. Hierbei sind bevorzugt insbesondere die mittels der Sensoreinheiten der Werkzeugmaschinenvorrichtung erfassten Kenngrößen und/oder die mittels der Kommunikationseinheit übertragenen Daten austauschbar und/oder zu einer Steuer- und/oder Regelung der die Werkzeugmaschinenvorrichtung umfassenden tragbaren Werkzeugmaschine nutzbar. Die Kommunikationseinheit kann hierbei kabelgebundene und/oder kabellose Schnittstellen und/oder Kommunikationsprotokolle aufweisen und/oder nutzen. Die Schnittstellen und/oder Kommunikationsprotokolle können beispielsweise als USB, als Canbus, als Ethernet, insbesondere mit twisted pair Kabeln (CAT5 oder CAT6), als optisches Übertragungsmedium, als KNX, als Powerline, als NFC (Nahbereichskommunikation), als RFID (Nahbereichskommunikation), als Zigbee (Nahbereichskommunikation), als Bluetooth, insbesondere nach dem Standard 4.0 Low Energy (kurze Reichweite), als WLAN, insbesondere nach dem Standard 801.11n (mittlere Reichweite), als GSM oder LTE (Mobilfunknetz), insbesondere für große Reichweiten, o. dgl. ausgebildet sein. Vorzugsweise ist eine externe Einheit, insbesondere ein Smartphone, als Router ausgebildet, der als Vermittlungsstelle zumindest zwischen der Kommunikationseinheit der Werkzeugmaschinenvorrichtung und der zentralen Datenbank und/oder einer weiteren externen Einheit, vorgesehen ist. Hierbei ist es vorteilhaft ein individuell abgestimmtes Firmensmartphone zu verwenden. Mittels der erfindungsgemäßen Ausgestaltung kann vorteilhaft eine zumindest teilweise automatische Berücksichtigung von Sicherheits- und/oder Betriebsbereichsregeln zu einer Steuer-und/oder Regelung zumindest der Antriebseinheit genutzt werden. Somit kann vorteilhaft ein hoher Bedienkomfort und eine sichere Einhaltung von Sicherheitsfunktionen gewährleistet werden.

Des Weiteren wird vorgeschlagen, dass die Steuer- und/oder Regeleinheit zumindest zu einer Steuer- und/oder Regelung der Antriebseinheit werkzeugmaschinensensorerfasste Daten und/oder kommunikationseinheitsübermittelte Daten nutzt. Bevorzugt sind die werkzeugmaschinensensorerfassten Daten, die von der Steuer- und/oder Regeleinheit zu einer Steuer- und/oder Regelung der Antriebseinheit nutzbar sind, mittels zumindest einer der Sensoreinheiten, insbesondere mittels allen Sensoreinheiten, der Werkzeugmaschinenvorrichtung erfassbar. Vorzugsweise sind die kommunikationseinheitsübermittelten Daten mittels der Kommunikationseinheit von einer externen Einheit und/oder von der zentralen Datenbank an die Steuer- und/oder Regeleinheit übertragbar. Hierbei ist es denkbar, dass die kommunikationseinheitsübermittelten Daten beispielsweise mittels zumindest einer Sensoreinheit einer Arbeitskleidung erfassbar sind und mittels der Kommunikationseinheit empfangbar sind und/oder direkt mittels der Kommunikationseinheit aus der zentralen Datenbank auslesbar sind. Die Sensoreinheiten der Werkzeugmaschinenvorrichtung und/oder der externen Einheit umfassen vorzugsweise jeweils zumindest ein Sensorelement zu einer Erfassung zumindest einer Kenngröße. Das Sensorelement kann hierbei beispielsweise als Lagesensor (Magnetfeldsensor o. dgl., zu einer Erfassung einer Lage im Raum), als Bewegungssensor (Geschwindigkeitssensor, Beschleunigungssensor, Drehratensensor o. dgl.), als GPS-Sensor (X, Y, Z auf Erdoberfläche), als Drucksensor (Dehnmessstreifen o. dgl.), als Gassensor (CO2-Sensor; Kohlenmonoxidsensor o. dgl.), als Temperatursensor, als Spannungssensor, als Feuchtigkeitssensor, als pH-Wert-Sensor, als Luftdrucksensor (Barometer), als Pulssensor o. dgl. ausgebildet sein. Mittels der erfindungsgemäßen Ausgestaltung kann vorteilhaft eine Berücksichtigung von ortsabhängigen Sicherheits-und/oder Betriebsbereichsregeln und zudem eine Einbeziehung von werkzeugmaschinensensorerfassten und/oder von kommunikationseinheitsübermittelten Daten zu einer Steuer- und/oder Regelung der tragbaren Werkzeugmaschine genutzt werden. Somit kann vorteilhaft eine hohe Arbeitssicherheit gewährleistet werden.

Ferner wird vorgeschlagen, dass die Steuer- und/oder Regeleinheit in Abhängigkeit von werkzeugmaschinensensorerfassten Daten und/oder von kommunikationseinheitsübermittelten Daten zumindest eine Information mittels einer Informationsausgabeeinheit ausgibt. Somit kann vorteilhaft eine Information an einen Bediener ausgegeben werden, um diesen beispielsweise über eine Zutrittskontrolle zu einem Bereich der Infrastruktur zu informieren. Somit ist vorteilhaft eine Zugangskontrolle zu einem Bereich der Infrastruktur realisierbar. Hierbei ist es denkbar, dass beispielsweise in der zentralen Datenbank hinterlegte Brandschutzregeln dazu führen, dass ein Bediener mit einer bestimmten tragbaren Werkzeugmaschine in definierten Räumen nur mit Genehmigung oder nur in Begleitung einer Werksfeuerwehr arbeiten darf. Zudem ist es vorteilhaft möglich, gefährdete Personen in einer Umgebung und/oder einer unmittelbaren Nähe eines Einsatzorts der tragbaren Werkzeugmaschine mittels optischen und/oder akustischen Signalen zu warnen.

Zudem wird vorgeschlagen, dass die Steuer- und/oder Regeleinheit zumindest eine Betriebsmoduseinstellung der Werkzeugmaschine in Abhängigkeit von werkzeugmaschinensensorerfassten Daten und/oder von kommunikationseinheitsübermittelten Daten steuert und/oder regelt. Somit kann vorteilhaft ein optimaler Betrieb der die Werkzeugmaschinenvorrichtung umfassenden tragbaren Werkzeugmaschine erreicht werden.

Die Steuer- und/oder Regeleinheit interpretiert, kombiniert und/oder wertet vorzugsweise die werkzeugmaschinensensorerfassten Daten und/oder die kommunikationseinheitsübermittelten Daten zu einer Steuer- und/oder Regelung der die Werkzeugmaschinenvorrichtung umfassenden tragbaren Werkzeugmaschine aus. Mittels einer Übertragung von Daten an die zentrale Datenbank ist es vorzugsweise denkbar, dass zumindest teilweise automatisch Arbeitsrapportberichte von Arbeiten erstellbar sind, die von Mitarbeitern des Facility Managements erfassbar und/oder protokollierbar sind. Hierdurch kann vorteilhaft dokumentiert werden, wer, wann, wie lange, mit welcher Art einer tragbaren Werkzeugmaschine an welchem Ort gearbeitet hat. Ereignet sich ein Schadensfall und/oder ein Unfall, so kann vorteilhaft ein automatisch erstelltes Protokoll später für einen Nachweis einer Einhaltung einer Sorgfaltspflicht herangezogen werden.

Infolge einer Festlegung von Gefährdungspotentialen, von Sicherheits- und/oder Betriebsbereichsregeln o. dgl. durch die Health and Safety Engineers (HSE) und/oder das Facility Management (FCM) für Räume, Labore, Werkstätten der Infrastruktur werden in der zentralen Datenbank entsprechende elektronische Daten hinterlegt. Durch die Kommunikation der die Werkzeugmaschinenvorrichtung umfassenden tragbaren Werkzeugmaschine mit der zentralen Datenbank ist beispielsweise mittels einer Ortung von GPS Koordinaten erkennbar, welche tragbare Werkzeugmaschine sich wo innerhalb der Infrastruktur befindet. Insbesondere bei einer zusätzlichen Bedienerdatenübertragung ist insbesondere erfassbar, welcher Bediener, insbesondere mit welchem Ausbildungsstand, sich mit welcher Art einer tragbaren Werkzeugmaschine wo befindet. Hierdurch ist vorteilhaft ein Transportieren einer tragbaren Werkzeugmaschine in einen für diese tragbare Werkzeugmaschine gesperrten Bereich der Infrastruktur erfassbar und die tragbare Werkzeugmaschine ist für eine Inbetriebnahme sperrbar, eine Information an einen Bediener ausgebbar und/oder an die Health and Safety Engineers (HSE) und/oder das Facility Management (FCM) meldbar. Somit kann vorteilhaft eine Zutrittsüberwachung erfolgen. Es kann vorteilhaft überwacht und/oder überprüft werden, in welchen Bereichen der Infrastruktur eine tragbare Werkzeugmaschine eingesetzt werden darf und ob ein Bediener ein Nachweis über eine Nutzungsbefugnis vorlegen muss. Somit kann vorteilhaft eine Überwachung von Regeln hinsichtlich einer Alleinarbeit erfolgen und/oder es kann eine automatische Ein-Mann-Überwachung durch zumindest ein Sensorelement der Arbeitskleidung in Kombination mit Sensoreinheiten der Werkzeugmaschinenvorrichtung erfolgen.

Weiter ist es denkbar, dass in der zentralen Datenbank elektronische Daten durch beispielsweise einen Health and Safety Engineer (HSE) und/oder das Facility Management (FCM) hinterlegt werden, die Grenzwerte für Umgebungsbedingungen definieren, wie beispielsweise Temperaturgrenzwerte, Luft-und/oder Gaskonzentrationsgrenzwerte. Infolge einer Übertragung der elektronischen Daten aus der zentralen Datenbank und einer Übertragung von werkzeugmaschinensensorerfassten Daten an die zentrale Datenbank ist vorteilhaft eine Überwachung und/oder ein Nachweis einer Einhaltung von Grenzwerten möglich.

Ferner ist es denkbar, dass mittels den durch die Kommunikationseinheit übertragenen elektronischen Daten ein Abgleich einer Nutzungsbefugnis erfolgt. Hierbei ist beispielsweise ein Ausbildungs- und/oder Einweisungsnachweis des Bedieners durch eine Eingabe (Chipkarte, RFID-Chip o. dgl.) oder durch ein Abgleich eines in der zentralen Datenbank hinterlegten Bedienerkennungsprofils denkbar, um eine Inbetriebnahme der tragbaren Werkzeugmaschine zu ermöglichen. Falls eine Inbetriebnahme ohne korrekten Nachweis erfolgt, ist die tragbare Werkzeugmaschine beispielsweise sperrbar oder es ist beispielsweise eine Warnung mittels der Informationsausgabeeinheit ausgebbar oder eine Leitzentrale ist informierbar.

Zudem ist es auch denkbar, dass mittels der Kommunikationseinheit Daten der tragbaren Werkzeugmaschine, wie beispielsweise Laufzeit, Vibrationen, Akkukapazität, Kühleinheitsleistung, Motorleistung o. dgl., an eine bedienerseitige Einheit, wie beispielsweise ein User-Interface, eine Armbanduhr, ein Smartphone, eine Datenbrille o. dgl., übermittelbar sind. Die Daten der tragbaren Werkzeugmaschine sind zudem an die zentrale Datenbank übertragbar, um beispielsweise eine Einhaltung von Grenzwerten überwachen zu können. Zudem sind beispielsweise Mitarbeiter einer Fremdfirma, die sich innerhalb der Infrastruktur aufhalten, überwachbar. Somit sind/ist beispielsweise eine Arbeitsdauer und/oder ein Arbeitsort der Mitarbeiter der Fremdfirma protokollierbar. Ferner ist mittels einer Übertragung von elektronischen Daten mittels der Kommunikationseinheit durch die Steuer- und/oder Regeleinheit vorzugsweise ein Bedienerprofil einrichtbar. Hierbei sind vorzugsweise durch die Steuer- und/oder Regeleinheit automatisch bei einer Übertragung von Daten mittels der Kommunikationseinheit Einstellungen der tragbaren Werkzeugmaschine vornehmbar, wie beispielsweise Berechtigungseinstellungen, Einstellung einer bevorzugten Motorkennline, Einstellung eines Ansprechverhaltens von Sicherheitsfunktionen (Kick-Back-Funktion etc.) o. dgl.

Des Weiteren ist insbesondere infolge eines Abgleichs von elektronischen Daten aus der zentralen Datenbank, von werkzeugmaschinensenorerfassten Daten und von mittels zumindest einer Sensoreinheit einer Arbeitskleidung eines Bedieners erfassten Daten eine automatische Überwachung einer Tragepflicht von einer persönlichen Schutzausrüstung (PSA), die beispielsweise einen Helm, zumindest einen Handschuh, zumindest eine Schutzbrille, Sicherheitsschuhe, eine Arbeitshose o. dgl. aufweist, und/oder eine Überwachung einer Einsatzorteinschränkung einer tragbaren Werkzeugmaschine erreichbar. Hierbei ist es denkbar, dass von einer Leitzentrale eine Not-Abschaltung der tragbaren Werkzeugmaschine in einem Bereich der Infrastruktur veranlassbar ist, sobald zumindest eine Vitalkenngröße eines Bedieners einen für einen Bediener kritischen Wert erreicht.

Zudem kann vorteilhaft mittels einer Übertragung von elektronischen Daten von einer zentralen Datenbank aus eine zentrale Updatefunktion für die tragbare Werkzeugmaschine ermöglicht werden. Ferner kann vorteilhaft eine fällige Wartung, wie beispielsweise ein Kohlenwechsel, an eine Leitzentrale übermittelt werden.

Die erfindungsgemäße Werkzeugmaschinenvorrichtung, die erfindungsgemäße Werkzeugmaschine und/oder das erfindungsgemäße Verfahren sollen/soll hierbei nicht auf die oben beschriebene Anwendung und Ausführungsform beschränkt sein. Insbesondere können/kann die erfindungsgemäße Werkzeugmaschinenvorrichtung, die erfindungsgemäße Werkzeugmaschine und/oder das erfindungsgemäße Verfahren zu einer Erfüllung einer hierin beschriebenen Funktionsweise eine von einer hierin genannten Anzahl von einzelnen Elementen, Bauteilen, Einheiten und/oder Verfahrensschritten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine, die als Winkelschleifer ausgebildet ist, mit zumindest einer erfindungsgemäßen Werkzeugmaschinenvorrichtung in einer schematischen Darstellung,
- Fig. 2: eine schematische Darstellung der erfindungsgemäßen Werkzeugmaschinenvorrichtung,
- Fig. 3: eine schematische Darstellung einer alternativen erfindungsgemäßen Werkzeugmaschinenvorrichtung,
- Fig. 4: eine alternative erfindungsgemäße Werkzeugmaschine, die als Bohrund/oder Meißelhammer ausgebildet ist, mit einer erfindungsgemäßen Werkzeugmaschinenvorrichtung in einer schematischen Darstellung,
- Fig. 5: eine weitere alternative erfindungsgemäße Werkzeugmaschine, die als Akkuschrauber ausgebildet ist, mit einer erfindungsgemäßen Werkzeugmaschinenvorrichtung in einer schematischen Darstellung und
- Fig. 6: eine weitere alternative erfindungsgemäße Werkzeugmaschine, die als Stichsäge ausgebildet ist, mit einer erfindungsgemäßen Werkzeugmaschinenvorrichtung in einer schematischen Darstellung.

### Beschreibung der Ausführungsbeispiele

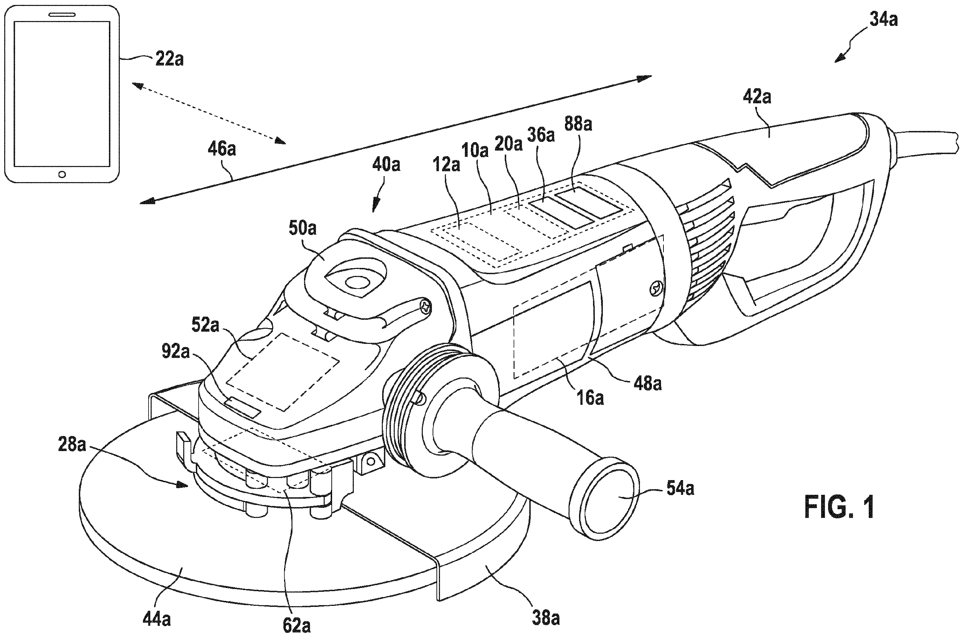

Figur 1 zeigt eine Werkzeugmaschine 34a mit zumindest einer Werkzeugmaschinenvorrichtung 10a. Die Werkzeugmaschine 34a ist als tragbare Werkzeugmaschine ausgebildet. Hierbei ist die Werkzeugmaschine 34a als Winkelschleifer ausgebildet. Somit umfasst die Werkzeugmaschine 34a zumindest eine als Schutzhaubeneinheit ausgebildete Werkzeugmaschinenzubehöreinheit 38a. Ferner umfasst die Werkzeugmaschine 34a zumindest ein Werkzeugmaschinengehäuse 40a und einen Haupthandgriff 42a, der sich an einer einem Bearbeitungswerkzeug 44a abgewandten Seite des Werkzeugmaschinengehäuses 40a in Richtung einer Haupterstreckungsrichtung 46a der Werkzeugmaschine 34a erstreckt. Das Bearbeitungswerkzeug 44a ist hierbei als Schleifscheibe ausgebildet. Es ist jedoch auch denkbar, dass das Bearbeitungswerkzeug 44a als Trenn-oder Polierscheibe ausgebildet ist. Das Werkzeugmaschinengehäuse 40a umfasst ein Motorgehäuse 48a zu einer Aufnahme einer Antriebseinheit 16a der Werkzeugmaschine 34a. Ferner umfasst das Werkzeugmaschinengehäuse 40a ein Getriebegehäuse 50a zu einer Aufnahme einer Abtriebseinheit 52a der Werkzeugmaschine 34a. Die Antriebseinheit 16a ist dazu vorgesehen, das Bearbeitungswerkzeug 44a über die Abtriebseinheit 52a rotierend anzutreiben. An dem Getriebegehäuse 50a ist eine weitere als Zusatzhandgriffeinheit ausgebildete Werkzeugmaschinenzubehöreinheit 54a angeordnet. Die als Zusatzhandgriffeinheit ausgebildete Werkzeugmaschinenzubehöreinheit 54a erstreckt sich quer zur Haupterstreckungsrichtung 46a der Werkzeugmaschine 34a.

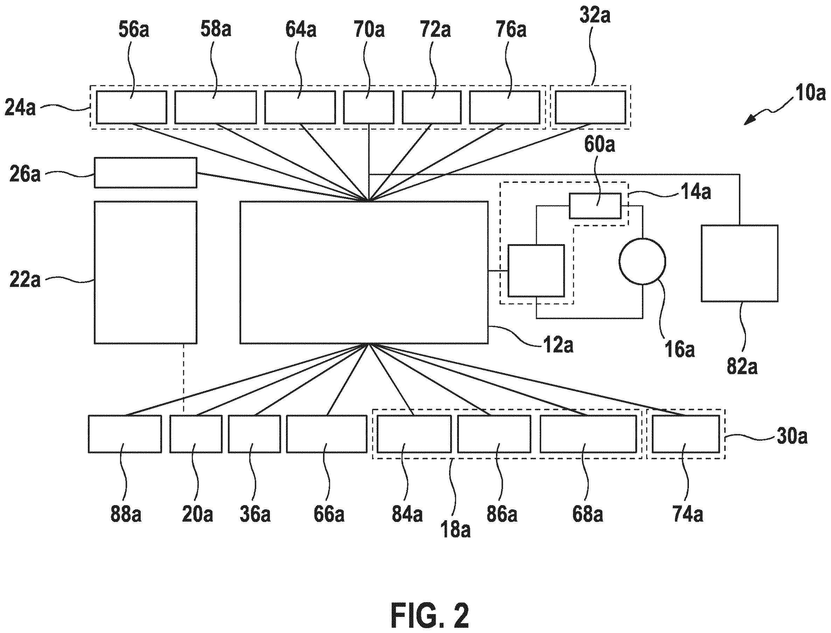

Die Werkzeugmaschinenvorrichtung 10a ist als Handwerkzeugmaschinenvorrichtung ausgebildet. Die Werkzeugmaschinenvorrichtung 10a umfasst vorzugsweise eine Energieversorgungsvorrichtung 82a (Figur 2). Somit ist die Werkzeugmaschinenvorrichtung 10a unabhängig von einer Energieversorgung der Werkzeugmaschine 34a betreibbar. Es ist jedoch auch denkbar, dass in einer alternativen Ausgestaltung der Werkzeugmaschinenvorrichtung 10a die Werkzeugmaschinenvorrichtung 10a mittels einer Energieversorgungsvorrichtung der Werkzeugmaschine 34a mit Energie versorgbar ist. Die Werkzeugmaschinenvorrichtung 10a umfasst ferner zumindest eine Steuer- und/oder Regeleinheit 12a und zumindest eine Antriebseinheitssensoreinheit 14a zu einer Erfassung zumindest einer Antriebseinheitskenngröße, die zumindest zu einer Steuerung und/oder Regelung einer Antriebseinheit 16a der Werkzeugmaschine 34a und/oder zu einer Informationsausgabe an einen Bediener von der Steuer- und/oder Regeleinheit 12a verarbeitbar ist. Die Steuer- und/oder Regeleinheit 12a ist in zumindest einem Betriebsmodus der Werkzeugmaschine 34a zu einer Steuerung und/oder Regelung der Antriebseinheit 16a in Abhängigkeit von der zumindest einen mittels der Antriebseinheitssensoreinheit 14a erfassten Antriebseinheitskenngröße vorgesehen.

Des Weiteren umfasst die Werkzeugmaschinenvorrichtung 10a zumindest eine Umgebungssensoreinheit 18a zu einer Erfassung zumindest einer Umgebungskenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Die Steuer- und/oder Regeleinheit 12a ist zu einer Steuerung und/oder Regelung der Antriebseinheit 16a in Abhängigkeit von der zumindest einen mittels der Umgebungssensoreinheit 18a erfassten Umgebungskenngröße und in Abhängigkeit von der zumindest einen mittels der Antriebseinheitssensoreinheit 14a erfassten Antriebseinheitskenngröße vorgesehen. Die Umgebungssensoreinheit 18a umfasst hierbei zumindest einen Lagesensor 84a, der eine Ausrichtung der Werkzeugmaschine 34a im Raum erfasst. Der Lagesensor 84a ist vorzugsweise als dreiachsiger Bewegungssensor ausgebildet. Es ist jedoch auch denkbar, dass der Lagesensor 84a eine andere, einem Fachmann als sinnvoll erscheinende Ausgestaltung aufweist. Zudem weist die Umgebungssensoreinheit 18a zumindest einen Standortbestimmungssensor 86a auf, das eine globale Position der Werkzeugmaschine 34a erfasst. Der Standortbestimmungssensor 86a ist vorzugsweise als GPS-Sensor ausgebildet. Es ist jedoch auch denkbar, dass der Standortbestimmungssensor 86a eine andere, einem Fachmann als sinnvoll erscheinende Ausgestaltung aufweist. Ferner weist die Umgebungssensoreinheit 18a zumindest ein Emissionssensorelement 68a auf, das dazu vorgesehen ist, Emissionen der Werkzeugmaschine 34a zu erfassen. Hierbei ist das Emissionssensorelement 68a dazu vorgesehen, Geräuschemissionen der Werkzeugmaschine 34a zu erfassen. Es ist jedoch auch denkbar, dass das Emissionssensorelement 68a dazu vorgesehen ist, andere, einem Fachmann als sinnvoll erscheinende Emissionen der Werkzeugmaschine 34a zu erfassen, wie beispielsweise eine elektromagnetische Strahlung, Staub, Funken, Gerüche, fluidförmige Schadstoffe und/oder Feststoffschadstoffe. Somit ist die Steuer- und/oder Regeleinheit 12a dazu vorgesehen, zumindest in Abhängigkeit von zumindest einer mittels der Umgebungssensoreinheit 18a erfassten Umgebungskenngröße, die als Emissionskenngröße der Werkzeugmaschine 34a ausgebildet ist, die Antriebseinheit 16a zu steuern und/oder zu regeln.

Die Werkzeugmaschinenvorrichtung 10a umfasst ferner zumindest eine Kommunikationseinheit 20a zu einer Kommunikation mit zumindest einer externen Einheit 22a zu einem Austausch von elektronischen Daten zumindest zu einer Steuerung und/oder Regelung der Antriebseinheit 16a. Die externe Einheit 22a umfasst hierbei zumindest ein Schallsensorelement (hier nicht näher dargestellt), das zu einer Erfassung einer Schallkenngröße der Werkzeugmaschine 34a vorgesehen ist. Die externe Einheit 22a ist hierbei zu einer Erfassung einer Schallkenngröße der Werkzeugmaschine 34a beabstandet zur Werkzeugmaschine 34a anordenbar. Somit ist eine Schallkenngröße der Werkzeugmaschine 34a erfassbar, die beabstandet zu einem direkten Bearbeitungsort der Werkzeugmaschine 34a ist. Die Steuer- und/oder Regeleinheit 12a ist hierbei dazu vorgesehen, zumindest in Abhängigkeit von der mittels der Kommunikationseinheit 20a empfangenen Schallkenngröße der Werkzeugmaschine 34a, die von der externen Einheit 22a erfasst wurde, zu einer Steuerung und/oder Regelung der Antriebseinheit 16a zu berücksichtigen. Somit ermittelt die Steuer- und/oder Regeleinheit 12a in zumindest einem Betriebsmodus der Werkzeugmaschine 34a zumindest eine Umgebungsbeeinflussung durch die Werkzeugmaschine 34a und berücksichtigt die Umgebungsbeeinflussung durch die Werkzeugmaschine 34a zumindest zu einer Steuerung und/oder Regelung der Antriebseinheit 16a der Werkzeugmaschine 34a. Die Kommunikationseinheit 20a ist zudem dazu vorgesehen, mit einem an einem Bearbeitungsort angeordneten Ortsnetzwerk zu kommunizieren. Hierbei sind elektronische Daten, die Orten, beispielsweise auf einem Firmengelände, eine Emissionsgrenze zuordnen, auf die Steuer- und/oder Regeleinheit 12a übertragbar. Die Steuer- und/oder Regeleinheit 12a ist dazu vorgesehen, die elektronischen Daten, die Orten eine Emissionsgrenze zuordnen, auszuwerten und zumindest in Abhängigkeit von einer mittels des Standortbestimmungssensors 86a bestimmten globalen Position der Werkzeugmaschine 34a eine Emissionskenngröße der Werkzeugmaschine 34a aktiv zu ändern, wie beispielsweise ein Maschinengeräusch usw. Zudem ist es denkbar, dass die Steuer-und/oder Regeleinheit 12a hierbei weitere Kenngrößen berücksichtigt, wie beispielsweise die mittels der externen Einheit 22a erfassten Schallkenngrößen der Werkzeugmaschine 34a, die mittels des Emissionssensorelements 68a erfassten Geräuschemissionen der Werkzeugmaschine 34a usw. Zudem ist denkbar, dass die Steuer- und/oder Regeleinheit 12a in zumindest einem Emissionsbetriebsmodus der Werkzeugmaschine 34a dazu vorgesehen ist, Geräuschemissionen der Werkzeugmaschine 34a infolge einer Gegenschallerzeugung mittels einer über die Kommunikationseinheit 20a ansteuerbaren externen Gegenschalleinheit zu dämpfen. Zudem ist es denkbar, dass die Steuer- und/oder Regeleinheit 12a in zumindest einem Emissionsbetriebsmodus der Werkzeugmaschine 34a dazu vorgesehen ist, eine Drehzahl der Antriebseinheit 16a zu reduzieren und/oder einer Drehbewegung der Antriebseinheit 16a eine zusätzliche Bewegung zu überlagern, welche Geräusche usw. reduziert. Weitere, einem Fachmann als sinnvoll erscheinende Ausgestaltungen zu einer Emissionsbegrenzung sind ebenfalls denkbar.

Ferner ist die Steuer- und/oder Regeleinheit 12a dazu vorgesehen, mittels der Kommunikationseinheit 20a auf eine zentrale Datenbank zuzugreifen, in der zumindest eine Sicherheits- und/oder Betriebsbereichsregel hinterlegt sind/ist, die zumindest zu einer Steuer- und/oder Regelung der Antriebseinheit 16a von der Steuer- und/oder Regeleinheit 12a verarbeitbar sind/ist. Hierbei greift die Steuer-und/oder Regeleinheit 12a in zumindest einem Betriebsmodus zumindest teilweise automatisch mittels der Kommunikationseinheit 20a auf die zentrale Datenbank zu, in der zumindest eine Sicherheits- und/oder Betriebsbereichsregel hinterlegt sind/ist, die zumindest zu einer Steuer- und/oder Regelung der Antriebseinheit 16a von der Steuer- und/oder Regeleinheit 12a verarbeitbar sind/ist. Somit nutzt die Steuer- und/oder Regeleinheit 12a zumindest zu einer Steuer-und/oder Regelung der Antriebseinheit 16a werkzeugmaschinensensorerfasste Daten und/oder kommunikationseinheitsübermittelte Daten. Ferner gibt die Steuer- und/oder Regeleinheit 12a in Abhängigkeit von werkzeugmaschinensensorerfassten Daten und/oder kommunikationseinheitsübermittelten Daten zumindest eine Information mittels einer Informationsausgabeeinheit 36a der Werkzeugmaschinenvorrichtung 10a aus, insbesondere zu einer Information eines Bedieners über einen Werkzeugmaschinenzustand und/oder zu einer Warnung vor einer Gefährdung. Zudem steuert und/oder regelt die Steuer- und/oder Regeleinheit 12a zumindest eine Betriebsmoduseinstellung der Werkzeugmaschine in Abhängigkeit von kommunikationseinheitsübermittelten Daten.

Mittels der Umgebungssensoreinheit 18a ist zudem ein Funkenflug bei einer Bearbeitung eines Werkstücks erfassbar. In Abhängigkeit von mittels der Umgebungssensoreinheit 18a erfassten Funkenflugkenngrößen ist die Antriebseinheit 16a mittels der Steuer- und/oder Regeleinheit 12a steuerbar und/oder regelbar. Hierbei ist die Funkenflugkenngröße beispielsweise mittels eines optischen Sensorelements der Umgebungssensoreinheit 18a und/oder mittels eines anderen, einem Fachmann als sinnvoll erscheinenden Sensorelements der Umgebungssensoreinheit 18a erfassbar.

Des Weiteren umfasst die Werkzeugmaschinenvorrichtung 10a zumindest eine Werkzeugmaschinenzubehörsensoreinheit 32a zu einer Erfassung zumindest einer Werkzeugmaschinenzubehörkenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Die Steuer- und/oder Regeleinheit 12a ist in zumindest einem Betriebsmodus der Werkzeugmaschine 34a zu einer Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels Umgebungssensoreinheit 18a erfassten Umgebungskenngröße und in Abhängigkeit von der zumindest einen mittels der Werkzeugmaschinenzubehörsensoreinheit 32a erfassten Werkzeugmaschinenzubehörkenngröße vorgesehen.

Ferner umfasst die Werkzeugmaschinenvorrichtung 10a zumindest eine Bearbeitungswerkzeugsensoreinheit 24a zu einer Erfassung zumindest einer Bearbeitungswerkzeugkenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Hierzu umfasst die Bearbeitungswerkzeugsensoreinheit 24a zumindest ein Bearbeitungswerkzeugsensorelement 70a, 72a, 76a. Die Steuer- und/oder Regeleinheit 12a ist hierbei zumindest in einem Anlernstartbetriebsmodus zu einer zumindest teilweisen automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bearbeitungswerkzeugsensoreinheit 24a erfassten Bearbeitungswerkzeugkenngröße, in Abhängigkeit von der zumindest einen mittels Umgebungssensoreinheit 18a erfassten Umgebungskenngröße und in Abhängigkeit von der zumindest einen mittels der Werkzeugmaschinenzubehörsensoreinheit 32a erfassten Werkzeugmaschinenzubehörkenngröße vorgesehen. Der Anlernstartbetriebsmodus ist automatisch nach einer Inbetriebnahme der Werkzeugmaschine 34a bis zu einem Erreichen einer Leerlaufdrehzahl aktiviert. Über zumindest einen Trägheitssensor 56a der Bearbeitungswerkzeugsensoreinheit 24a, zumindest einen Drehmomentsensor 58a der Bearbeitungswerkzeugsensoreinheit 24a und/oder einen Stromsensor 60a der Antriebseinheitssensoreinheit 14a ist eine Schwungmasse des Bearbeitungswerkzeugs 44a mittels der Steuer-und/oder Regeleinheit 12a ermittelbar (Figur 2). Der Trägheitssensor 56a ist vorzugsweise als dreiachsiger Beschleunigungssensor ausgebildet. Über zumindest ein in einer Speichereinheit (hier nicht näher dargestellt) der Steuer- und/oder Regeleinheit 12a abgelegtes Kennfeld ist die ermittelte Schwungmasse eindeutig einer bestimmten Bearbeitungswerkzeugart zuordenbar. Zudem ist es denkbar, dass eine Erfassung von weiteren Bearbeitungswerkzeugkenngrößen zusätzlich über RFID, NFC, Scannen eines Barcodes, DataMatrix-Codes o.ä. erfolgt. In Abhängigkeit von dem durch die Steuer- und/oder Regeleinheit 12a ermittelten Bearbeitungswerkzeug 44a, sind Antriebseinheitsparameter zu einer Steuerung und/oder Regelung der Antriebseinheit 16a anpassbar und/oder veränderbar.

Im Anlernstartbetriebsmodus der Werkzeugmaschine 34a ist eine für das Bearbeitungswerkzeug 44a optimale Drehzahl in Abhängigkeit von einem Material (Stahl, Edelstahl, Stein, Beton, Holz usw.) eines zu bearbeitenden Werkstücks mittels der Steuer- und/oder Regeleinheit 12a zumindest teilweise automatisch einstellbar. Hierzu umfasst die Werkzeugmaschinenvorrichtung 10a zumindest eine Werkstücksensoreinheit 30a zu einer Erfassung zumindest einer Werkstückkenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Hierzu umfasst die Werkstücksensoreinheit 30a zumindest ein Werkstücksensorelement 74a (Figur 2). Die Steuer- und/oder Regeleinheit 12a ist hierbei zumindest im Anlernstartbetriebsmodus zu einer zumindest teilweise automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels Umgebungssensoreinheit 18a erfassten Umgebungskenngröße, in Abhängigkeit von der zumindest einen mittels der Bearbeitungswerkzeugsensoreinheit 24a erfassten Bearbeitungswerkzeugkenngröße, in Abhängigkeit von der zumindest einen mittels der Werkzeugmaschinenzubehörsensoreinheit 32a erfassten Werkzeugmaschinenzubehörkenngröße und in Abhängigkeit von der zumindest einen mittels der Werkstücksensoreinheit 30a erfassten Werkstückkenngröße vorgesehen.

Ferner sind im Anlernstartbetriebsmodus der Werkzeugmaschine 34a Auffälligkeiten hinsichtlich einer Vibration des Bearbeitungswerkzeugs 44a während eines Hochfahrens bis zu einer Leerlaufdrehzahl der Antriebseinheit 16a erfassbar. Hierdurch ist eine falsche Montage, ein Verschleiß und/oder ein Defekt des Bearbeitungswerkzeugs 44a erfassbar. Mittels der Steuer- und/oder Regeleinheit 12a ist somit über eine Informationsausgabeeinheit 36a der Werkzeugmaschinenvorrichtung 10a eine Information an einen Bediener ausgebbar und/oder die Antriebseinheit 16a ist aktiv abbremsbar und/oder eine Energieversorgung zur Antriebseinheit 16a ist unterbrechbar. Zudem ist infolge einer Ermittlung des Bearbeitungswerkzeugs 44a eine maximal für das Bearbeitungswerkzeug 44a geeignete Drehzahl der Antriebseinheit 16a einstellbar. Somit ermittelt die Steuer-und/oder Regeleinheit 12a zumindest im Anlernstartbetriebsmodus einen Bearbeitungswerkzeugzustand und gibt den Bearbeitungswerkzeugzustand mittels der Informationsausgabeeinheit 36a aus und/oder berücksichtigt den Bearbeitungswerkzeugzustand zu einer Steuerung und/oder Regelung der Antriebseinheit 16a der Werkzeugmaschine 34a.

Zudem weist die Werkzeugmaschine 34a zumindest eine Bearbeitungswerkzeugsicherungseinheit 62a auf, die zumindest ein Sicherungselement (hier nicht näher dargestellt) zu einer Sicherung des Bearbeitungswerkzeugs 44a an einer Werkzeugaufnahme 28a der Werkzeugmaschine 34a umfasst. Hierbei weist die Bearbeitungswerkzeugsensoreinheit 24a zumindest ein Sicherungssensorelement 64a auf, das dazu vorgesehen ist, in zumindest einem Betriebsmodus eine sichere Befestigung des Bearbeitungswerkzeugs 44a an der Werkzeugaufnahme 28a zu überwachen. Erfasst das Sicherungssensorelement 64a einen gelösten Zustand des Bearbeitungswerkzeugs 44a, ist mittels der Steuer- und/oder Regeleinheit 12a eine Energieversorgung der Antriebseinheit 16a unterbindbar. Somit ist eine Inbetriebnahme der Antriebseinheit 16a gesperrt. Hierbei ist denkbar, dass eine Antriebsspindel und/oder eine Spannmutter der Werkzeugmaschine 34a eine Bohrung aufweist, in die das Sicherungselement einführbar ist, insbesondere über einen Stellmotor einführbar, dessen Position mittels des Sicherungssensorelements 64a erfassbar ist. Ferner ist auch denkbar, dass ein als Spannmutter ausgebildetes Sicherungselement mittels einer als Aktoreinheit 26a ausgebildeten Anzieheinheit bis zu einem definierten Drehmoment vorspannbar ist, wobei das Drehmoment mittels des Drehmomentsensors 58a erfassbar ist. Somit umfasst die Werkzeugmaschinenvorrichtung 10a zumindest die Aktoreinheit 26a zu einer Arretierung der Werkzeugaufnahme 28a der Werkzeugmaschine 34a zumindest in Abhängigkeit von der zumindest einen mittels der Bearbeitungswerkzeugsensoreinheit 24a erfassten Bearbeitungswerkzeugkenngröße.

Des Weiteren ist in einer Ausgestaltung der Werkzeugmaschinenvorrichtung 10a in dem als Spannmutter ausgebildeten Sicherungselement ein Schwingungserregerelement 66a (Figur 2) der Werkzeugmaschinenvorrichtung 10a angeordnet, mittels dessen eine sichere Anordnung des Bearbeitungswerkzeugs 44a auf der Antriebsspindel überprüfbar ist. Das Schwingungserregerelement 66a kann als Smart-Material-Element, als Piezo-Element, als Schwingspulenelement oder als ein anderes, einem Fachmann als sinnvoll erscheinendes Erregerelement ausgebildet sein. Hierbei ist das Bearbeitungswerkzeug 44a mittels des Schwingungserregerelements 66a in Schwingung versetzbar, die mittels der Bearbeitungswerkzeugsensoreinheit 24a erfassbar ist und mittels der Steuer- und/oder Regeleinheit 12a auswertbar ist. Das Bearbeitungswerkzeug 44a ist ferner mittels der Steuer- und/oder Regeleinheit 12a in Abschnitte unterteilbar, wobei jeder Abschnitt einzeln hinsichtlich einer Schwingung durch die Steuer- und/oder Regeleinheit 12a auswertbar ist. Somit kann vorteilhaft eine Beschädigung des Bearbeitungswerkzeugs 44a in einem Abschnitt erkannt werden. Weitere, einem Fachmann als sinnvoll erscheinende Ausgestaltungen zu einer Erfassung von Bearbeitungswerkzeugkenngrößen sind ebenfalls denkbar.

In einem Komfortbetriebsmodus der Werkzeugmaschine 34a ist das Bearbeitungswerkzeug 44a nach einem Ausschalten der Werkzeugmaschine 34a mittels einer Steuerung und/oder Regelung einer Bremseinheit der Werkzeugmaschinenvorrichtung 10a und/oder der Antriebseinheit 16a durch die Steuer- und/oder Regeleinheit 12a aktiv abbremsbar, insbesondere impulsartig aktiv abbremsbar. Hierdurch ist das als Spannmutter ausgebildete Sicherungselement auf der Antriebsspindel lösbar. Es kann vorteilhaft ein einfaches und werkzeugloses Wechseln und/oder Abnehmen des Bearbeitungswerkzeugs 44a erreicht werden. Zu einer Bestimmung eines Bremsmoments zu einem Lösen der Spannmutter ist ein Trägheitsmoment des Bearbeitungswerkzeugs 44a bei einem Hochlaufen aus einem Stillstand zu einer Leerlaufdrehzahl bestimmbar. Hierzu ist mittels der Bearbeitungswerkzeugsensoreinheit 24a das Trägheitsmoment des Bearbeitungswerkzeugs 44a bestimmbar, indem Parameter wie Hochlaufzeit, benötigtes Drehmoment für eine Beschleunigung und/oder eine Drehzahl des Bearbeitungswerkzeugs 44a erfassbar sind.

Zudem ist die Antriebsspindel und/oder ein als Tellerrad ausgebildetes Abtriebselement (hier nicht näher dargestellt) der Abtriebseinheit 52a im Komfortbetriebsmodus der Werkzeugmaschine 34a nach einem Ausschalten der Werkzeugmaschine 34a mittels einer Steuerung und/oder Regelung der Antriebseinheit 16a durch die Steuer- und/oder Regeleinheit 12a derart positionierbar, dass die Antriebsspindel und/oder das als Tellerrad ausgebildete Abtriebselement komfortabel mittels eines Arretierelements in einer Arretierposition arretierbar sind. Hierzu wird nach einem Ausschalten der Werkzeugmaschine 34a mittels der Antriebseinheitssensoreinheit 14a eine Lage einer Abtriebswelle der Antriebseinheit 16a erfasst, wie beispielsweise mittels eines Lagesensors (Drehgeber, Resolver, Hallsensoren usw.) der Antriebseinheitssensoreinheit 14a. Hieraus ist mittels der Steuer- und/oder Regeleinheit 12a eine Lage der Antriebsspindel errechenbar. Aus der errechneten Lage der Antriebsspindel ist eine Lage des drehfest mit der Antriebsspindel verbundenen Abtriebselements errechenbar. Die Steuer- und/oder Regeleinheit 12a steuert und/oder regelt die Antriebseinheit 16a derart, dass zumindest eine Arretierausnehmung des Abtriebselements fluchtend mit dem Arretierelement zum Stillstand gelangt. Somit ist das Arretierelement von einem Bediener direkt in die Arretierausnehmung einführbar. Es ist jedoch auch denkbar, dass die Bearbeitungswerkzeugsensoreinheit 24a ein Bearbeitungswerkzeugsensorelement 70a, 72a, 76a umfasst, das dazu vorgesehen ist, eine Position des Abtriebselements zu erfassen und dass die Steuer- und/oder Regeleinheit 12a zu einer Positionierung des Abtriebselements in einer Arretierposition die Antriebseinheit 16a in Abhängigkeit einer mittels des Bearbeitungswerkzeugsensorelements 70a, 72a, 76a erfassten Abtriebselementkenngröße steuert und/oder regelt. Hierdurch ist zudem eine Bearbeitungswerkzeugposition des an einer Werkzeugaufnahme 28a der Werkzeugmaschine 34a angeordneten Bearbeitungswerkzeugs 44a erfassbar. Somit ist die Steuer- und/oder Regeleinheit 12a dazu vorgesehen, zumindest in Abhängigkeit von zumindest einer mittels der Antriebseinheitssensoreinheit 14a erfassten Antriebseinheitskenngröße eine Bearbeitungswerkzeugposition eines an einer Werkzeugaufnahme 28a der Werkzeugmaschine angeordneten Bearbeitungswerkzeugs 44a zu ermitteln.

Des Weiteren umfasst die Werkzeugmaschinenvorrichtung 10a zumindest eine Arbeitsbereichbeleuchtungseinheit 92a, die in Abhängigkeit von zumindest einer mittels der Umgebungssensoreinheit 18a erfassten Umgebungskenngröße von der Steuer- und/oder Regeleinheit 12a steuerbar und/oder regelbar ist.

Ferner umfasst die Werkzeugmaschinenvorrichtung 10a zumindest eine Eingabeeinheit 88a zu einer Eingabe zumindest einer Bearbeitungskenngröße, die zumindest zu einer Steuerung und/oder Regelung der Antriebseinheit 16a von der Steuer- und/oder Regeleinheit 12a verarbeitbar ist. Mittels der Eingabeeinheit 88a ist zumindest eine Steuerung und/oder Regelung der Antriebseinheit 16a durch die Steuer- und/oder Regeleinheit 12a beeinflussbar. Zudem ist mittels der Eingabeeinheit 88a ein Betriebsmodus der Werkzeugmaschine 34a einstellbar. Hierbei weist die Werkzeugmaschine 34a zumindest den Anlernstartbetriebsmodus, einen Lernbetriebsmodus, einen Referenzbetriebsmodus, einen Sicherheitsbetriebsmodus, einen Synchronisationsbetriebsmodus, den Emissionsbetriebsmodus, den Komfortbetriebsmodus und/oder einen Automatikbetriebsmodus auf. Hierbei ist die Steuer- und/oder Regeleinheit 12a zumindest im Emissionsbetriebsmodus zu einer zumindest teilweisen automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Umgebungssensoreinheit 18a erfassten Umgebungskenngröße und in Abhängigkeit von den zumindest mittels der Kommunikationseinheit 20a der Werkzeugmaschinenvorrichtung 10a empfangenen elektronischen Daten vorgesehen.

Im Automatikbetriebsmodus der Werkzeugmaschine 34a werden die oben genannten Betriebsmodi automatisch von der Steuer- und/oder Regeleinheit 12a ausgewählt, insbesondere in Abhängigkeit von erfassten Kenngrößen, die mittels den oben genannten Sensoreinheiten ermittelbar sind. Es erfolgt im Automatikbetriebsmodus eine zumindest im Wesentlichen automatische Steuerung und/oder Regelung der Antriebseinheit 16a durch die Steuer- und/oder Regeleinheit 12a in Abhängigkeit von der Bearbeitungswerkzeugsensoreinheit 24a, von der Umgebungssensoreinheit 18a, von der Werkstücksensoreinheit 30a, von der Werkzeugmaschinenzubehörsensoreinheit 32a und von der Antriebseinheitssensoreinheit 14a.

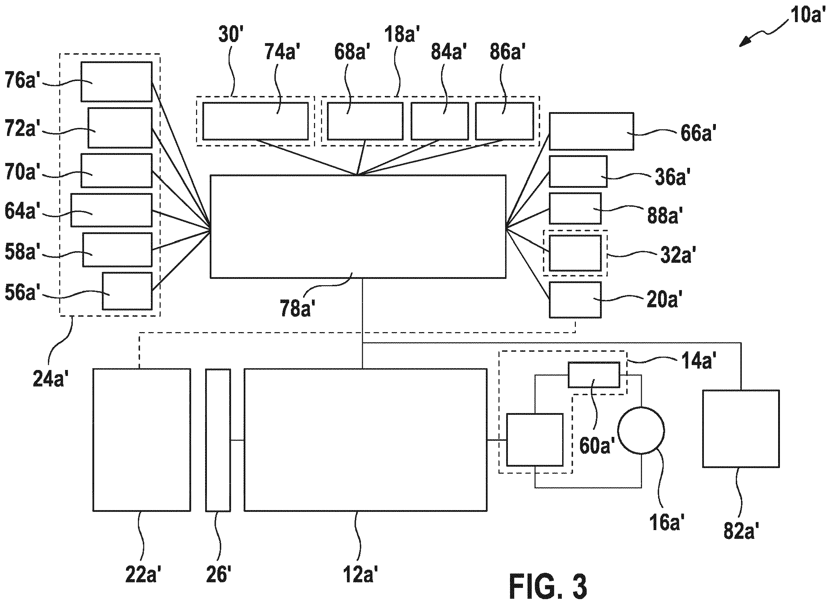

In Figur 3 ist eine alternative Werkzeugmaschinenvorrichtung 10a' dargestellt. Die alternative Werkzeugmaschinenvorrichtung 10a' weist eine zumindest im Wesentlichen analoge Ausgestaltung im Vergleich zu der in der Figur 2 schematisch dargestellten Werkzeugmaschinenvorrichtung 10a auf. Im Unterschied zu der in der Figur 2 schematisch dargestellten Werkzeugmaschinenvorrichtung 10a weist die in Figur 3 schematisch dargestellte alternative Werkzeugmaschinenvorrichtung 10a' zumindest eine Vorverarbeitungseinheit 78a' auf. Die Vorverarbeitungseinheit 78a' ist dazu vorgesehen, eine Kommunikation von mehreren Sensorelementen und/oder Sensoreinheiten der alternativen Werkzeugmaschinenvorrichtung 10a' untereinander und/oder mit einer Steuer- und/oder Regeleinheit 12a' der alternativen Werkzeugmaschinenvorrichtung 10a' zu organisieren. Hierbei ist die Vorverarbeitungseinheit 78a' dazu vorgesehen, einzelne Sensorsignale zu bündeln und Vorentscheidungen zu treffen. Eine Kommunikation zwischen der Vorverarbeitungseinheit 78a' und der Steuer- und/oder Regeleinheit 12a' kann hierbei kabellos und/oder kabelgebunden erfolgen.

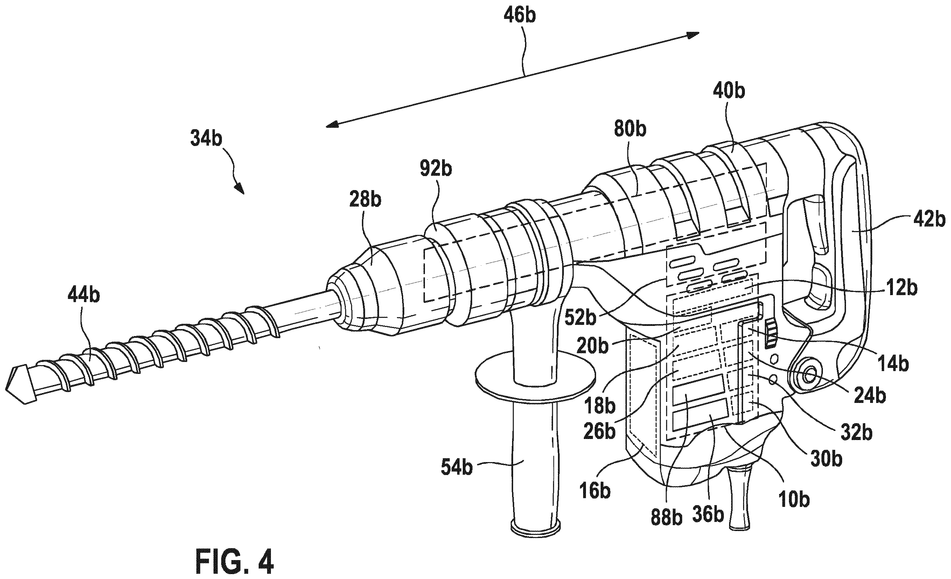

Figuren 4 bis 6 zeigen weitere Ausführungsbeispiele der Erfindung. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 6 ist der Buchstabe a durch den Buchstaben b oder c ersetzt.

Figur 4 zeigt eine Werkzeugmaschine 34b mit zumindest einer Werkzeugmaschinenvorrichtung 10b. Die Werkzeugmaschine 34b ist als tragbare Werkzeugmaschine ausgebildet. Hierbei ist die Werkzeugmaschine 34b als Bohr- und/oder Meißelhammer ausgebildet. Die Werkzeugmaschine 34b umfasst zumindest eine Schlagwerkvorrichtung 80b. Ferner umfasst die Werkzeugmaschine 34b ein Werkzeugmaschinengehäuse 40b, an dem in einem Frontbereich eine Werkzeugaufnahme 28b der Werkzeugmaschine 34b zu einer Aufnahme eines Bearbeitungswerkzeugs 44b angeordnet ist. An einer dem Frontbereich abgewandten Seite umfasst die Werkzeugmaschine 34b einen Haupthandgriff 42b zu einer Führung der Werkzeugmaschine 34b und zu einer Übertragung einer Kraft, insbesondere einer Andrückkraft, von einem Bediener auf die Werkzeugmaschine 34b. Die Werkzeugmaschine 34b ist ferner mit einer lösbaren Zusatzhandgriffeinheit ausgeführt. Hierbei kann die Zusatzhandgriffeinheit über eine Rastverbindung oder andere, einem Fachmann als sinnvoll erscheinende Verbindungen lösbar am Werkzeugmaschinengehäuse 40b befestigt sein.

Zu einer Erzeugung eines Antriebsmoments und zu einer Erzeugung eines Schlagimpulses mittels der Schlagwerkvorrichtung 80b weist die Werkzeugmaschine 34b eine Antriebseinheit 16b auf. Über eine Abtriebseinheit 52b der Werkzeugmaschine 34b wird ein Antriebsmoment der Antriebseinheit 16b zur Erzeugung eines Schlagimpulses an die Schlagwerkvorrichtung 80b übertragen. Es ist jedoch auch denkbar, dass die Werkzeugmaschine 34b entkoppelt von der Abtriebseinheit 52b ausgebildet ist und die Antriebseinheit 16b zu einer Erzeugung eines Schlagimpulses im Wesentlichen direkt auf die Schlagwerkvorrichtung 80b einwirkt. Ein Schlagimpuls der Schlagwerkvorrichtung 80b wird auf eine, einem Fachmann bekannte Art und Weise erzeugt. Ein rotierender Antrieb der Werkzeugaufnahme 28b und somit des Bearbeitungswerkzeugs 44b wird ebenfalls auf eine, einem Fachmann bereits bekannte Art und Weise erzeugt.

Die Werkzeugmaschinenvorrichtung 10b umfasst analog zu der in der Beschreibung der Figuren 1 bis 3 beschriebenen Werkzeugmaschinenvorrichtung 10a zumindest eine Bearbeitungswerkzeugsensoreinheit 24b, zumindest eine Umgebungssensoreinheit 18b, zumindest eine Werkstücksensoreinheit 30b, zumindest eine Werkzeugmaschinenzubehörsensoreinheit 32b, zumindest eine Eingabeeinheit 88b, zumindest eine Kommunikationseinheit 20b und zumindest eine Informationsausgabeeinheit 36b.

Mittels der Eingabeeinheit 88b ist ein Betriebsmodus der Werkzeugmaschine 34b einstellbar. Hierbei weist die Werkzeugmaschine 34b zumindest einen Anlernstartbetriebsmodus, einen Lernbetriebsmodus, einen Referenzbetriebsmodus, einen Sicherheitsbetriebsmodus, einen Synchronisationsbetriebsmodus, einen Emissionsbetriebsmodus, einen Komfortbetriebsmodus und/oder einen Automatikbetriebsmodus auf. Im Komfortbetriebsmodus ist in die Antriebseinheit 16b zu einer Realisierung einer automatischen Drehrichtungsumkehrfunktion in Abhängigkeit von einer mittels der Bearbeitungswerkzeugsensoreinheit 24b erfassten Bearbeitungswerkzeugkenngröße, wie beispielsweise einer Bearbeitungswerkzeugabmessung, und in Abhängigkeit einer mittels der Werkstücksensoreinheit 30b erfassten Werkstückkenngröße, wie beispielsweise einem Abstand zwischen der Werkzeugmaschine 34b und einem Werkstück, durch die Steuer- und/oder Regeleinheit 12b steuerbar und/oder regelbar. Hierbei ist bei einem Erreichen einer mittels der Eingabeeinheit 88b eingestellten Bohrtiefe eine Drehrichtungsumkehr der Antriebseinheit 16b aktivierbar. Diese Drehrichtungsumkehr ist vorteilhaft sehr sanft, also nicht ruckartig. Zudem ist eine Drehzahl der Antriebseinheit 16b geringer als eine Drehzahl während eines Bohrvorgangs. Infolge der Drehrichtungsumkehr ist ein Verklemmen des Bearbeitungswerkzeugs 44b im Werkstück vorteilhaft verhinderbar. Zudem wird ein Bediener vorteilhaft bei einem Entfernen des Bearbeitungswerkzeugs 44b aus dem Werkstück unterstützt.

Zudem ist im Komfortbetriebsmodus mittels der Steuer- und/oder Regeleinheit 12b eine Werkzeugwechselfunktion steuerbar und/oder regelbar. Hierbei öffnet und/oder schließt die Steuer- und/oder Regeleinheit 12b in zumindest einem Betriebsmodus eine Werkzeugaufnahme 28b der Werkzeugmaschine 34b zumindest teilweise automatisch. Hierzu umfasst die Werkzeugmaschinenvorrichtung 10b zumindest eine Aktoreinheit 26b zu einer Betätigung und/oder zu einer Arretierung der Werkzeugaufnahme 28b der Werkzeugmaschine 34b zumindest in Abhängigkeit von zumindest einer mittels der Bearbeitungswerkzeugsensoreinheit 24b erfassten Bearbeitungswerkzeugkenngröße. Hierbei ist mittels der Aktoreinheit 26b eine Arretierung der Werkzeugaufnahme 28b lösbar. Das in der Werkzeugaufnahme 28b angeordnete Bearbeitungswerkzeug 44b ist somit entnehmbar. Erfasst die Bearbeitungswerkzeugsensoreinheit 24b eine Einführung eines Bearbeitungswerkzeugs 44b in die Werkzeugaufnahme 28b ist die Aktoreinheit 26b von der Steuer- und/oder Regeleinheit 12b zu einer Arretierung der Werkzeugaufnahme 28b automatisch aktivierbar. Die Aktoreinheit 26b kann hierbei als Servomotor mit Spindelgetriebe, als Linearmotor oder als Pneumatikzylinder, der mittels der Schlagwerkvorrichtung 80b direkt oder indirekt über einen Druckspeicher mit einem Druck beaufschlagbar ist, ausgebildet sein. Es kann somit vorteilhaft ein Einhandwerkzeugwechsel realisiert werden, da ein Bediener mit einer Hand die Werkzeugmaschine 34b halten kann und mit einer anderen Hand das Bearbeitungswerkzeug 44b einführen/wechseln kann.

Im Emissionsbetriebsmodus ist mittels der Umgebungssensoreinheit 18b eine Geräuschemission und/oder eine Staubemission der Werkzeugmaschine 34b erfassbar. Erkennt die Steuer- und/oder Regeleinheit 12b eine Überschreitung eines Geräuschemissionsgrenzwerts, der mittels der Eingabeeinheit 88b eingegeben ist oder mittels der Kommunikationseinheit 20b übertragen ist, ist eine Schlagenergie und/oder eine Schlagzahl der Schlagwerkvorrichtung 80b und/oder eine Drehzahl der Antriebseinheit 16b reduzierbar. Somit ermittelt die Steuer- und/oder Regeleinheit 12b über die Umgebungssensoreinheit 18b zumindest eine Umgebungsbeeinflussung durch die Werkzeugmaschine 34b und berücksichtigt die Umgebungsbeeinflussung durch die Werkzeugmaschine 34b zumindest zu einer Steuerung und/oder Regelung der Antriebseinheit 16b der Werkzeugmaschine 34b. Erkennt die Steuer- und/oder Regeleinheit 12b eine Überschreitung eines Staubemissionsgrenzwerts, der mittels der Eingabeeinheit 88b eingegeben ist oder mittels der Kommunikationseinheit 20b übertragen ist, ist ein mit der Werkzeugmaschine 34b verbundener Staubsauger aktivierbar und/oder zusätzlich in einen Hochleistungsabsaugmodus versetzbar. Erkennt die Steuer- und/oder Regeleinheit 12b eine geringe Staubemission der Werkzeugmaschine 34b, so ist der mit der Werkzeugmaschine 34b verbundene Staubsauger in einen Niedrigleistungsmodus umschaltbar, um Geräuschemissionen gering zu halten. Hinsichtlich weiterer Merkmale der Werkzeugmaschinenvorrichtung 10b darf auf die in der Beschreibung der Figuren 1 bis 3 beschriebene Werkzeugmaschinenvorrichtung 10a verwiesen werden.

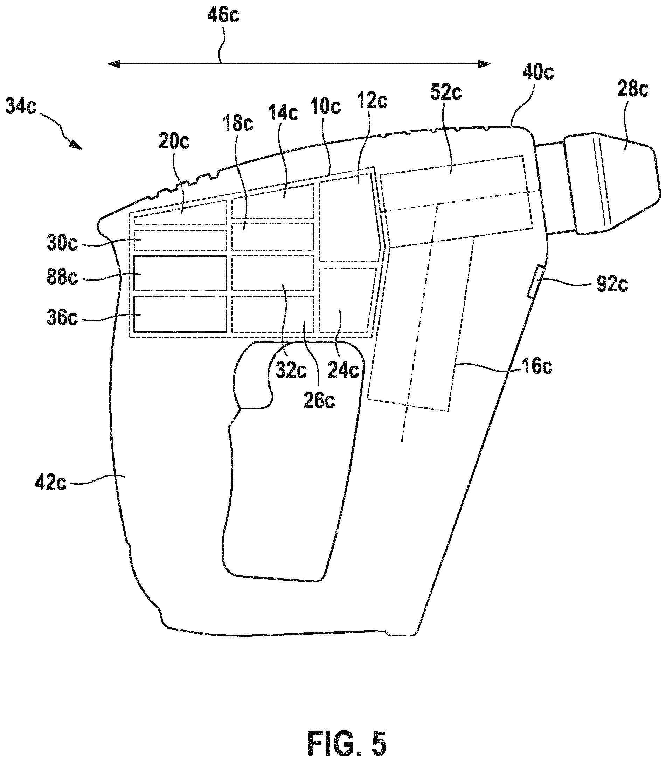

Figur 5 zeigt eine Werkzeugmaschine 34c mit zumindest einer Werkzeugmaschinenvorrichtung 10c. Die Werkzeugmaschine 34c ist als tragbare Werkzeugmaschine ausgebildet. Hierbei ist die Werkzeugmaschine 34c als Akkuschrauber ausgebildet. Die Werkzeugmaschine 34c umfasst zumindest ein Werkzeugmaschinengehäuse 40c, an dem in einem Frontbereich eine Werkzeugaufnahme 28c der Werkzeugmaschine 34c zu einer Aufnahme eines Bearbeitungswerkzeugs (hier nicht näher dargestellt) angeordnet ist. An einer dem Frontbereich abgewandten Seite umfasst die Werkzeugmaschine 34c einen Haupthandgriff 42c zu einer Führung der Werkzeugmaschine 34c und zu einer Übertragung einer Kraft, insbesondere einer Andrückkraft, von einem Bediener auf die Werkzeugmaschine 34c. Zu einer Erzeugung eines Antriebsmoments weist die Werkzeugmaschine 34c eine Antriebseinheit 16c auf. Über eine Abtriebseinheit 52c der Werkzeugmaschine 34c wird ein Antriebsmoment der Antriebseinheit 16c zur Erzeugung einer Rotationsbewegung an die Werkzeugaufnahme 28c übertragen. Es ist jedoch auch denkbar, dass die Werkzeugmaschine 34c entkoppelt von der Abtriebseinheit 52c ausgebildet ist und die Antriebseinheit 16c zu einer Erzeugung einer Rotationsbewegung im Wesentlichen direkt auf die Werkzeugaufnahme 28c einwirkt. Ein rotierender Antrieb der Werkzeugaufnahme 28c und des Bearbeitungswerkzeugs wird somit auf eine, einem Fachmann bereits bekannte Art und Weise erzeugt.

Die Werkzeugmaschinenvorrichtung 10c umfasst analog zu der in der Beschreibung der Figuren 1 bis 3 beschriebenen Werkzeugmaschinenvorrichtung 10a zumindest eine Bearbeitungswerkzeugsensoreinheit 24c, zumindest eine Umgebungssensoreinheit 18c, zumindest eine Werkstücksensoreinheit 30c, zumindest eine Werkzeugmaschinenzubehörsensoreinheit 32c, zumindest eine Eingabeeinheit 88c, zumindest eine Kommunikationseinheit 20c und zumindest eine Informationsausgabeeinheit 36c.

Mittels der Eingabeeinheit 88c ist ein Betriebsmodus der Werkzeugmaschine 34c einstellbar. Hierbei weist die Werkzeugmaschine 34c zumindest einen Anlernstartbetriebsmodus, einen Lernbetriebsmodus, einen Referenzbetriebsmodus, einen Sicherheitsbetriebsmodus, einen Synchronisationsbetriebsmodus, einen Emissionsbetriebsmodus, einen Komfortbetriebsmodus und/oder einen Automatikbetriebsmodus auf. Hierbei ist im Komfortbetriebsmodus mittels der Steuer-und/oder Regeleinheit 12c eine Werkzeugwechselfunktion steuerbar und/oder regelbar. Hierbei öffnet und/oder schließt die Steuer- und/oder Regeleinheit 12c in zumindest einem Betriebsmodus die Werkzeugaufnahme 28c der Werkzeugmaschine 34c zumindest teilweise automatisch. Hierzu umfasst die Werkzeugmaschinenvorrichtung 10c zumindest eine Aktoreinheit 26c zu einer Betätigung und/oder zu einer Arretierung der Werkzeugaufnahme 28c der Werkzeugmaschine 34c zumindest in Abhängigkeit von zumindest einer mittels der Bearbeitungswerkzeugsensoreinheit 24c erfassten Bearbeitungswerkzeugkenngröße. Hierbei ist mittels der Aktoreinheit 26c eine Arretierung der Werkzeugaufnahme 28c lösbar. Das in der Werkzeugaufnahme 28c angeordnete Bearbeitungswerkzeug 44c ist somit entnehmbar. Erfasst die Bearbeitungswerkzeugsensoreinheit 24c eine Einführung eines Bearbeitungswerkzeugs 44c in die Werkzeugaufnahme 28c ist die Aktoreinheit 26c von der Steuer- und/oder Regeleinheit 12c zu einer Arretierung der Werkzeugaufnahme 28c automatisch aktivierbar. Die Aktoreinheit 26c kann hierbei als Servomotor, als Linearmotor, als elektromagnetische Kupplung oder als eine andere, einem Fachmann als sinnvoll erscheinende Aktoreinheit ausgebildet sein.

Im Emissionsbetriebsmodus ist mittels der Umgebungssensoreinheit 18c eine Geräuschemission der Werkzeugmaschine 34c erfassbar. Erkennt die Steuer-und/oder Regeleinheit 12c eine Überschreitung eines Geräuschemissionsgrenzwerts, der mittels der Eingabeeinheit 88c eingegeben ist oder mittels der Kommunikationseinheit 20c übertragen ist, ist eine Kennlinie einer Bremseinheit der Werkzeugmaschine 34c veränderbar und/oder eine Drehzahl der Antriebseinheit 16c reduzierbar. Somit ermittelt die Steuer- und/oder Regeleinheit 12c über die Umgebungssensoreinheit 18c zumindest eine Umgebungsbeeinflussung durch die Werkzeugmaschine 34c und berücksichtigt die Umgebungsbeeinflussung durch die Werkzeugmaschine 34c zumindest zu einer Steuerung und/oder Regelung der Antriebseinheit 16c der Werkzeugmaschine 34c. Hinsichtlich weiterer Merkmale der Werkzeugmaschinenvorrichtung 10c darf auf die in der Beschreibung der Figuren 1 bis 3 beschriebene Werkzeugmaschinenvorrichtung 10a verwiesen werden.

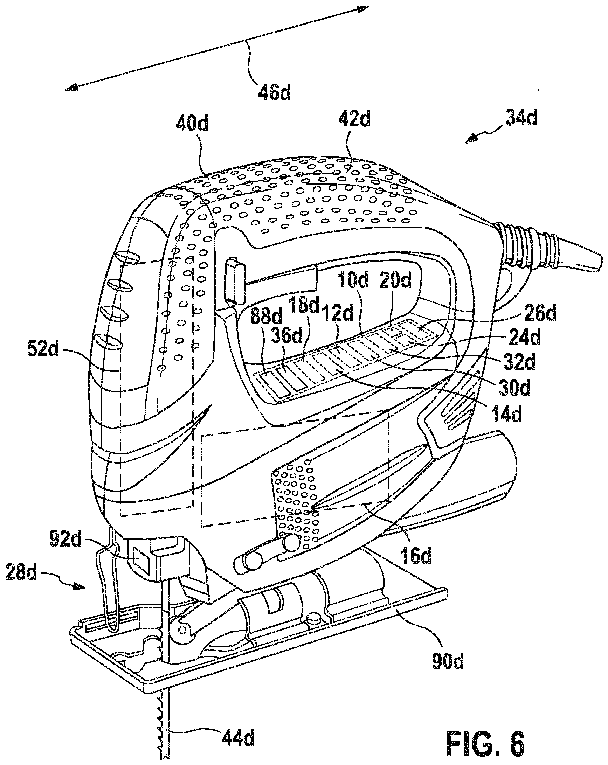

Figur 6 zeigt eine Werkzeugmaschine 34d mit zumindest einer Werkzeugmaschinenvorrichtung 10d. Die Werkzeugmaschine 34d ist als tragbare Werkzeugmaschine ausgebildet. Hierbei ist die Werkzeugmaschine 34d als Stichsäge ausgebildet. Die Werkzeugmaschine 34d weist ein Werkzeugmaschinengehäuse 40d auf, das eine Antriebseinheit 16d der Werkzeugmaschine 34d und eine Abtriebseinheit 52d der Werkzeugmaschine 34d umschließt. Die Antriebseinheit 16d und die Abtriebseinheit 52d sind dazu vorgesehen, ein in einer Werkzeugaufnahme 28d der Werkzeugmaschine 34d eingespanntes Bearbeitungswerkzeug 44d oszillierend anzutreiben. Hierbei wird das Bearbeitungswerkzeug 44d im Wesentlichen senkrecht zu einer Bearbeitungsrichtung oszillierend angetrieben. Das Bearbeitungswerkzeug 44d ist als Stichsägeblatt ausgebildet. Es ist jedoch auch denkbar, dass das Bearbeitungswerkzeug 44d von einem anderen, einem Fachmann als sinnvoll erscheinendem Bearbeitungswerkzeug gebildet wird. Ein oszillierender Antrieb des Bearbeitungswerkzeugs 44d erfolgt hierbei auf eine, einem Fachmann bereits bekannte Art und Weise.

Die Werkzeugmaschinenvorrichtung 10d umfasst analog zu der in der Beschreibung der Figuren 1 bis 3 beschriebenen Werkzeugmaschinenvorrichtung 10a zumindest eine Bearbeitungswerkzeugsensoreinheit 24d, zumindest eine Umgebungssensoreinheit 18d, zumindest eine Werkstücksensoreinheit 30d, zumindest eine Werkzeugmaschinenzubehörsensoreinheit 32d, zumindest eine Eingabeeinheit 88d, zumindest eine Kommunikationseinheit 20d und zumindest eine Informationsausgabeeinheit 36d.

Mittels der Eingabeeinheit 88c ist ein Betriebsmodus der Werkzeugmaschine 34c einstellbar. Hierbei weist die Werkzeugmaschine 34c zumindest einen Anlernstartbetriebsmodus, einen Lernbetriebsmodus, einen Referenzbetriebsmodus, einen Sicherheitsbetriebsmodus, einen Synchronisationsbetriebsmodus, einen Emissionsbetriebsmodus, einen Komfortbetriebsmodus und/oder einen Automatikbetriebsmodus auf. Hierbei ist das Bearbeitungswerkzeug 44d im Komfortbetriebsmodus nach einem Ausschalten der Werkzeugmaschine 34d in einer Verstauposition anhaltbar, in der das Bearbeitungswerkzeug 44d einen minimalen Überstand über das Werkzeugmaschinengehäuse 40d und/oder eine Grundplatte 90d der Werkzeugmaschine 34d aufweist. Hierzu ist mittels der Bearbeitungswerkzeugsensoreinheit 24d eine Position des Bearbeitungswerkzeugs 44d relativ zum Werkzeugmaschinengehäuse 40d und/oder zur Grundplatte 90d erfassbar. Anhand der erfassten Position des Bearbeitungswerkzeug 44d steuert und/oder regelt die Steuer- und/oder Regeleinheit 12d die Antriebseinheit 16d derart, dass das Bearbeitungswerkzeug 44d in der Verstauposition zum Stillstand gelangt. Somit kann vorteilhaft eine platzsparende Verstauung der Werkzeugmaschine 34d ermöglicht werden.

Zudem ist im Komfortbetriebsmodus eine Werkzeugwechselfunktion manuell und/oder automatisch aktivierbar. Hierbei ist das Bearbeitungswerkzeug 44d im Komfortbetriebsmodus nach einem Ausschalten der Werkzeugmaschine 34d in einer Werkzeugwechselposition anhaltbar, in der das Bearbeitungswerkzeug 44d einen maximalen Überstand über das Werkzeugmaschinengehäuse 40d und/oder die Grundplatte 90d aufweist. Hierzu ist mittels der Bearbeitungswerkzeugsensoreinheit 24d eine Position des Bearbeitungswerkzeugs 44d relativ zum Werkzeugmaschinengehäuse 40d und/oder zur Grundplatte 90d erfassbar. Anhand der erfassten Position des Bearbeitungswerkzeugs 44d steuert und/oder regelt die Steuer- und/oder Regeleinheit 12d die Antriebseinheit 16d derart, dass das Bearbeitungswerkzeug 44d in der Werkzeugwechselposition zum Stillstand gelangt. Die Werkzeugwechselfunktion ist manuell von einem Bediener aktivierbar und/oder die Umgebungssensoreinheit 18d erfasst eine Ausrichtung der Werkzeugmaschine 34d im Raum und einen Kontakt mit einer Oberfläche an einer der Werkzeugaufnahme 28d abgewandten Seite des Werkzeugmaschinengehäuses 40d. Somit kann vorteilhaft ein komfortabler Werkzeugwechsel durchgeführt werden.

Im Emissionsbetriebsmodus ist mittels der Werkstücksensoreinheit 30d ein Schwingen eines Werkstücks während einer Bearbeitung erfassbar. Hierdurch kann vorteilhaft eine Geräuschemission des Werkstücks vorteilhaft erkannt werden. Die Steuer- und/oder Regeleinheit 12d wertet die erfasste Schwingung des Werkstücks aus und aktiviert eine Gegenschwingereinheit (hier nicht näher dargestellt) der Werkzeugmaschine 34d und/oder verändert eine Hubfrequenz und/oder einen Pendelhub zu einer Beeinflussung der Schwingung des Werkstücks.

Im Emissionsbetriebsmodus ist ferner mittels der Umgebungssensoreinheit 18d eine Geräuschemission und/oder eine Staubemission der Werkzeugmaschine 34d erfassbar. Erkennt die Steuer- und/oder Regeleinheit 12d eine Überschreitung eines Geräuschemissionsgrenzwerts, der mittels der Eingabeeinheit 88d eingegeben ist oder mittels der Kommunikationseinheit 20d übertragen ist, ist eine Hubfrequenz, ein Pendelhub und/oder eine Drehzahl reduzierbar. Somit ermittelt die Steuer- und/oder Regeleinheit 12d über die Umgebungssensoreinheit 18d zumindest eine Umgebungsbeeinflussung durch die Werkzeugmaschine 34d und berücksichtigt die Umgebungsbeeinflussung durch die Werkzeugmaschine 34d zumindest zu einer Steuerung und/oder Regelung der Antriebseinheit 16d der Werkzeugmaschine 34d. Erkennt die Steuer- und/oder Regeleinheit 12b eine Überschreitung eines Staubemissionsgrenzwerts, der mittels der Eingabeeinheit 88d eingegeben ist oder mittels der Kommunikationseinheit 20d übertragen ist, ist ein mit der Werkzeugmaschine 34d verbundener Staubsauger aktivierbar und/oder zusätzlich in einen Hochleistungsabsaugmodus versetzbar. Erkennt die Steuer- und/oder Regeleinheit 12d eine geringe Staubemission der Werkzeugmaschine 34d, so ist der mit der Werkzeugmaschine 34d verbundene Staubsauger in einen Niedrigleistungsmodus umschaltbar, um Geräuschemissionen gering zu halten. Hinsichtlich weiterer Merkmale der Werkzeugmaschinenvorrichtung 10d darf auf die in der Beschreibung der Figuren 1 bis 3 beschriebene Werkzeugmaschinenvorrichtung 10a verwiesen werden.

## Patentansprüche

1. Werkzeugmaschinenvorrichtung, insbesondere Handwerkzeugmaschinenvorrichtung, mit zumindest einer Steuer-und/oder Regeleinheit (12a; 12a'; 12b; 12c; 12d) und mit zumindest einer Antriebseinheitssensoreinheit (14a; 14a'; 14b; 14c; 14d) zu einer Erfassung zumindest einer Antriebseinheitskenngröße, die zumindest zu einer Steuerung und/oder Regelung einer Antriebseinheit (16a; 16a'; 16b; 16c; 16d) einer Werkzeugmaschine und/oder zu einer Informationsausgabe an einen Bediener von der Steuer- und/oder Regeleinheit (12a; 12a'; 12b; 12c; 12d) verarbeitbar ist, und mit zumindest einer Umgebungssensoreinheit (18a; 18a'; 18b; 18c; 18d) zu einer Erfassung zumindest einer Umgebungskenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist, **dadurch gekennzeichnet, dass** die Steuer- und/oder Regeleinheit (12a; 12a'; 12b; 12c; 12d) dazu vorgesehen ist, zumindest in Abhängigkeit von zumindest einer mittels der Umgebungssensoreinheit (18a; 18a'; 18b; 18c; 18d) erfassten Umgebungskenngröße, die als Emissionskenngröße der Werkzeugmaschine ausgebildet ist, die Antriebseinheit (16a; 16a'; 16b; 16c; 16d) zu steuern und/oder zu regeln.

2. Werkzeugmaschinenvorrichtung nach Anspruch 1, **gekennzeichnet durch** zumindest eine Kommunikationseinheit (20a; 20a'; 20b; 20c; 20d) zu einer Kommunikation mit zumindest einer externen Einheit (22a; 22a'; 22b; 22c; 22d) zu einem Austausch von elektronischen Daten zumindest zu einer Steuerung und/oder Regelung der Antriebseinheit (16a; 16a'; 16b; 16c; 16d).

3. Werkzeugmaschinenvorrichtung nach Anspruch 2, **dadurch gekennzeichnet, dass** die Steuer- und/oder Regeleinheit (12a; 12a'; 12b; 12c; 12d) dazu vorgesehen ist, mittels der Kommunikationseinheit (20a; 20a'; 20b; 20c; 20d) auf eine zentrale Datenbank zuzugreifen, in der zumindest eine Sicherheits- und/oder Betriebsbereichsregel hinterlegt sind/ist, die zumindest zu einer Steuer- und/oder Regelung der Antriebseinheit (16a; 16a'; 16b; 16c; 16d) von der Steuer- und/oder Regeleinheit (12a; 12a'; 12b; 12c; 12d) verarbeitbar sind/ist.

4. Werkzeugmaschinenvorrichtung nach einem der vorhergehenden Ansprüche, **dadurch gekennzeichnet, dass** die Steuer- und/oder Regeleinheit (12a; 12a'; 12b; 12c; 12d) dazu vorgesehen ist, zumindest in Abhängigkeit von zumindest einer mittels der Antriebseinheitssensoreinheit (14a; 14a'; 14b; 14c; 14d) erfassten Antriebseinheitskenngröße eine Bearbeitungswerkzeugposition eines an einer Werkzeugaufnahme (28a; 28b; 28c; 28d) der Werkzeugmaschine angeordneten Bearbeitungswerkzeugs (44a; 44b; 44d) zu ermitteln.

5. Werkzeugmaschinenvorrichtung nach einem der vorhergehenden Ansprüche, **gekennzeichnet durch** zumindest eine Arbeitsbereichbeleuchtungseinheit (92a; 92b; 92c; 92d), die in Abhängigkeit von zumindest einer mittels der Umgebungssensoreinheit (18a; 18a'; 18b; 18c; 18d) erfassten Umgebungskenngröße von der Steuer- und/oder Regeleinheit (12a; 12a'; 12b; 12c; 12d) steuerbar und/oder regelbar ist.

6. Werkzeugmaschinenvorrichtung nach einem der vorhergehenden Ansprüche, insbesondere nach dem Oberbegriff des Anspruchs 1, **gekennzeichnet durch** zumindest eine Bearbeitungswerkzeugsensoreinheit (24a; 24a'; 24b; 24c; 24d) zu einer Erfassung zumindest einer Bearbeitungswerkzeugkenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist.

7. Werkzeugmaschinenvorrichtung nach einem der vorhergehenden Ansprüche, insbesondere nach Anspruch 5, **gekennzeichnet durch** zumindest eine Aktoreinheit (26a; 26a'; 26b; 26c; 26d) zu einer Betätigung und/oder zu einer Arretierung einer Werkzeugaufnahme (28a; 28a'; 28b; 28c; 28d) der Werkzeugmaschine zumindest in Abhängigkeit von der zumindest einen mittels der Bearbeitungswerkzeugsensoreinheit (24a; 24a'; 24b; 24c; 24d) erfassten Bearbeitungswerkzeugkenngröße.

8. Werkzeugmaschinenvorrichtung nach einem der vorhergehenden Ansprüche, **gekennzeichnet durch** zumindest eine Werkstücksensoreinheit (30a; 30a'; 30b; 30c; 30d) zu einer Erfassung zumindest einer Werkstückkenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist.

9. Werkzeugmaschinenvorrichtung nach einem der vorhergehenden Ansprüche, **gekennzeichnet durch** zumindest eine Werkzeugmaschinenzubehörsensoreinheit (32a; 32a'; 32b; 32c; 32d) zu einer Erfassung zumindest einer Werkzeugmaschinenzubehörkenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist.

10. Werkzeugmaschine, insbesondere tragbare Werkzeugmaschine, mit zumindest einer Werkzeugmaschinenvorrichtung nach einem der vorhergehenden Ansprüche.

11. Werkzeugmaschinensystem mit zumindest einer Werkzeugmaschine nach Anspruch 10 und mit zumindest einer externen Einheit, insbesondere einer externen Sensoreinheit.

## Claims

1. Power tool device, in particular a handheld power tool device, with at least one open-loop and/or closed-loop control unit (12a; 12a'; 12b; 12c; 12d) and with at least one drive unit sensor unit (14a; 14a'; 14b; 14c; 14d) for recording at least one drive unit characteristic variable, which can be processed by the open-loop and/or closed-loop control unit (12a; 12a'; 12b; 12c; 12d) at least for providing an open-loop and/or closed-loop control of a drive unit (16a; 16a'; 16b; 16c; 16d) of a power tool and/or for providing an output of information to an operator, and with at least one ambient sensor unit (18a; 18a'; 18b; 18c; 18d) for recording at least one ambient characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for providing an output of information to an operator, **characterized in that** the open-loop and/or closed-loop control unit (12a; 12a'; 12b; 12c; 12d) is intended for controlling the drive unit (16a; 16a'; 16b; 16c; 16d) in an open-loop and/or closed-loop manner at least in dependence on at least one ambient characteristic variable recorded by means of the ambient sensor unit (18a; 18a'; 18b; 18c; 18d) and formed as an emission characteristic variable of the power tool.

2. Power tool device according to Claim 1, **characterized by** at least one communication unit (20a; 20a'; 20b; 20c; 20d) for communication with at least one external unit (22a; 22a'; 22b; 22c; 22d) for an exchange of electronic data at least for providing an open-loop and/or closed-loop control of the drive unit (16a; 16a'; 16b; 16c; 16d).

3. Power tool device according to Claim 2, **characterized in that** the open-loop and/or closed-loop control unit (12a; 12a'; 12b; 12c; 12d) is intended for accessing by means of the communication unit (20a; 20a'; 20b; 20c; 20d) a central database, in which there is stored at least one safety and/or operating area rule, which can be processed by the open-loop and/or closed-loop control unit (12a; 12a'; 12b; 12c; 12d) at least for providing an open-loop and/or closed-loop control of the drive unit (16a; 16a'; 16b; 16c; 16d).

4. Power tool device according to one of the preceding claims, **characterized in that** the open-loop and/or closed-loop control unit (12a; 12a'; 12b; 12c; 12d) is intended for determining a machining tool position of a machining tool (44a; 44b; 44d) arranged on a tool holder (28a; 28b; 28c; 28d) of the power tool at least in dependence on at least one drive unit characteristic variable recorded by means of the drive unit sensor unit (14a; 14a'; 14b; 14c; 14d).

5. Power tool device according to one of the preceding claims, **characterized by** at least one working area lighting unit (92a; 92b; 92c; 92d), which can be controlled by the open-loop and/or closed-loop control unit (12a; 12a'; 12b; 12c; 12d) in an open-loop and/or closed-loop manner in dependence on at least one ambient characteristic variable recorded by means of the ambient sensor unit (18a; 18a'; 18b; 18c; 18d).

6. Power tool device according to one of the preceding claims, in particular according to the preamble of Claim 1, **characterized by** at least one machining tool sensor unit (24a; 24a'; 24b; 24c; 24d) for recording at least one machining tool characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for providing an output of information to an operator.

7. Power tool device according to one of the preceding claims, in particular according to Claim 5, **characterized by** at least one actuator unit (26a; 26a'; 26b; 26c; 26d) for actuation and/or arrestment of a tool holder (28a; 28a'; 28b; 28c; 28d) of the power tool at least in dependence on the at least one machining tool characteristic variable recorded by means of the machining tool sensor unit (24a; 24a'; 24b; 24c; 24d).

8. Power tool device according to one of the preceding claims, **characterized by** at least one workpiece sensor unit (30a; 30a'; 30b; 30c; 30d) for recording at least one workpiece characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for providing an output of information to an operator.

9. Power tool device according to one of the preceding claims, **characterized by** at least one power tool accessory sensor unit (32a; 32a'; 32b; 32c; 32d) for recording at least one power tool accessory characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for providing an output of information to an operator.

10. Power tool, in particular portable power tool, with at least one power tool device according to one of the preceding claims.

11. Power tool system with at least one power tool according to Claim 10 and with at least one external unit, in particular an external sensor unit.

## Revendications

1. Arrangement pour machine-outil, notamment arrangement pour machine-outil portatif, comprenant au moins une unité de commande et/ou de régulation (12a ; 12a' ; 12b ; 12c ; 12d) et comprenant au moins une unité de capteur d'unité d'entraînement (14a ; 14a' ; 14b ; 14c ; 14d) servant à une acquisition d'au moins une grandeur caractéristique d'unité d'entraînement, laquelle peut être traitée par l'unité de commande et/ou de régulation (12a ; 12a' ; 12b ; 12c ; 12d) au moins en vue d'une commande et/ou régulation d'une unité d'entraînement (16a ; 16a' ; 16b ; 16c ; 16d) d'une machine-outil et/ou en vue d'une délivrance d'informations à un opérateur, et comprenant au moins une unité de capteur d'environnement (18a ; 18a' ; 18b ; 18c ; 18d) servant à une acquisition d'au moins une grandeur caractéristique d'environnement, laquelle peut être traitée par l'unité de commande et/ou de régulation (12a ; 12a' ; 12b ; 12c ; 12d) au moins en vue d'une commande et/ou régulation de l'unité d'entraînement (16a ; 16a' ; 16b ; 16c ; 16d) et/ou en vue d'une délivrance d'informations à un opérateur, **caractérisé en ce que** l'unité de commande et/ou de régulation (12a ; 12a' ; 12b ; 12c ; 12d) est conçue pour commander et/ou réguler l'unité d'entraînement (16a ; 16a' ; 16b ; 16c ; 16d) au moins en fonction d'au moins une grandeur caractéristique d'environnement acquise au moyen de l'unité de capteur d'environnement (18a ; 18a' ; 18b ; 18c ; 18d), laquelle est configurée en tant que grandeur caractéristique d'émission de la machine-outil.

2. Arrangement pour machine-outil selon la revendication 1, **caractérisé par** au moins une unité de communication (20a ; 20a' ; 20b ; 20c ; 20d) servant à une communication avec au moins une unité externe (22a ; 22a' ; 22b ; 22c ; 22d) en vue d'un échange de données électroniques au moins en vue d'une commande et/ou d'une régulation de l'unité d'entraînement (16a ; 16a' ; 16b ; 16c ; 16d).

3. Arrangement pour machine-outil selon la revendication 2, **caractérisé en ce que** l'unité de commande et/ou de régulation (12a ; 12a' ; 12b ; 12c ; 12d) est conçue pour accéder, au moyen de l'unité de communication (20a ; 20a' ; 20b ; 20c ; 20d), à une base de données centrale dans laquelle est/sont stockée(s) au moins une règle de sécurité et/ou de plage de fonctionnement, laquelle/lesquelles peut/peuvent au moins être traitée(s) par l'unité de commande et/ou de régulation (12a ; 12a' ; 12b ; 12c ; 12d) en vue d'une commande et/ou régulation de l'unité d'entraînement (16a ; 16a' ; 16b ; 16c ; 16d).

4. Arrangement pour machine-outil selon l'une des revendications précédentes, **caractérisé en ce que** l'unité de commande et/ou de régulation (12a ; 12a' ; 12b ; 12c ; 12d) est conçue pour communiquer une position d'outil d'usinage d'un outil d'usinage (44a ; 44b ; 44d) disposé au niveau d'un attachement d'outil (28a ; 28b ; 28c ; 28d) de la machine-outil au moins en fonction d'une grandeur caractéristique d'unité d'entraînement acquise au moyen de l'unité de capteur d'unité d'entraînement (14a ; 14a' ; 14b ; 14c ; 14d).

5. Arrangement pour machine-outil selon l'une des revendications précédentes, **caractérisé par** au moins une unité d'éclairage de zone de travail (92a ; 92b ; 92c ; 92d), laquelle peut être commandée et/ou régulée par l'unité de commande et/ou de régulation (12a ; 12a' ; 12b ; 12c ; 12d) en fonction d'au moins une grandeur caractéristique d'environnement acquise au moyen de l'unité de capteur d'environnement (18a ; 18a' ; 18b ; 18c ; 18d).

6. Arrangement pour machine-outil selon l'une des revendications précédentes, notamment selon le préambule de la revendication 1, **caractérisé par** au moins une unité de capteur d'outil d'usinage (24a ; 24a' ; 24b ; 24c ; 24d) servant à une acquisition d'au moins une grandeur caractéristique d'outil d'usinage, laquelle peut être traitée par l'unité de commande et/ou de régulation (12a ; 12a' ; 12b ; 12c ; 12d) au moins en vue d'une commande et/ou régulation de l'unité d'entraînement (16a ; 16a' ; 16b ; 16c ; 16d) et/ou en vue d'une délivrance d'informations à un opérateur.

7. Arrangement pour machine-outil selon l'une des revendications précédentes, notamment selon la revendication 5, **caractérisé par** au moins une unité d'actionneur (26a ; 26a' ; 26b ; 26c ; 26d) servant à un actionnement et/ou à un blocage d'un attachement d'outil (28a ; 28a' ; 28b ; 28c ; 28d) de la machine-outil au moins en fonction de l'au moins une grandeur caractéristique d'outil d'usinage acquise au moyen de l'unité de capteur d'outil d'usinage (24a ; 24a' ; 24b ; 24c ; 24d).

8. Arrangement pour machine-outil selon l'une des revendications précédentes, **caractérisé par** au moins une unité de capteur de pièce ouvrée (30a ; 30a' ; 30b ; 30c ; 30d) servant à une acquisition d'au moins une grandeur caractéristique de pièce ouvrée, laquelle peut être traitée par l'unité de commande et/ou de régulation (12a ; 12a' ; 12b ; 12c ; 12d) au moins en vue d'une commande et/ou régulation de l'unité d'entraînement (16a ; 16a' ; 16b ; 16c ; 16d) et/ou en vue d'une délivrance d'informations à un opérateur.

9. Arrangement pour machine-outil selon l'une des revendications précédentes, **caractérisé par** au moins une unité de capteur d'accessoire de machine-outil (32a ; 32a' ; 32b ; 32c ; 32d) servant à une acquisition d'au moins une grandeur caractéristique d'accessoire de machine-outil, laquelle peut être traitée par l'unité de commande et/ou de régulation (12a ; 12a' ; 12b ; 12c ; 12d) au moins en vue d'une commande et/ou régulation de l'unité d'entraînement (16a ; 16a' ; 16b ; 16c ; 16d) et/ou en vue d'une délivrance d'informations à un opérateur.

10. Machine-outil, notamment machine-outil portative, comprenant au moins un arrangement pour machine-outil selon l'une des revendications précédentes.

11. Système de machine-outil comprenant au moins une machine-outil selon la revendication 10 et comprenant au moins une unité externe, notamment une unité de capteur externe.
